# EUROPÄISCHE PATENTSCHRIFT

(11) **EP 3 445 975 B1**
(45) Veröffentlichungstag und Bekanntmachung des Hinweises auf die Patenterteilung: **06.01.2021**
(21) Anmeldenummer: 17716897.8
(22) Anmeldetag: 11.04.2017
(51) Int. Cl.: F04F 5/16, F04F 5/24, F04F 5/44, F04F 5/46

(54) **EJEKTORVORRICHTUNG UND KOMBINATION AUS EINER ZYLINDERKOPFHAUBE UND EINER EJEKTORVORRICHTUNG**
EJECTOR DEVICE AND COMBINATION OF A CYLINDER HEAD COVER AND EJECTOR DEVICE
DISPOSITIF D'ÉJECTION ET COMBINAISON CONSTITUÉE D'UN CAPOT DE TÊTE DE CYLINDRE ET D'UN DISPOSITIF D'ÉJECTION

(30) Priorität: 19.04.2016 DE 102016206616
(43) Veröffentlichungstag der Anmeldung: 27.02.2019
(73) Patentinhaber: ElringKlinger AG, 72581 Dettingen (DE)
(72) Erfinder: HERTER, Stefan, 88524 Offingen (DE); JÄGER, Martin, 72144 Dusslingen (DE); EHNI, Armin, 73252 Lenningen (DE); DWENGER, Stefan, 72762 Reutlingen (DE); SERVE, Yvonne, 70567 Stuttgart (DE)
(74) Vertreter: Hoeger, Stellrecht & Partner Patentanwälte mbB
(86) Internationale Anmeldenummer: PCT/EP2017/058710
(87) Internationale Veröffentlichungsnummer: WO 2017/182339

(56) Entgegenhaltungen:
- DE-A1- 10 119 553
- DE-A1- 19 530 423
- DE-A1-102009 022 597
- GB-A- 1 109 232
- US-A- 2 382 391
- US-A- 5 611 673
- US-A1- 2011 209 772
- US-A1- 2015 240 732
- US-A1- 2015 292 524

## Beschreibung

Die vorliegende Erfindung betrifft eine Ejektorvorrichtung. Eine Ejektorvorrichtung kann insbesondere eine Strahlpumpe zur Erzeugung eines Unterdrucks und zum Ansaugen oder Absaugen eines Saugmediums sein.

Ejektoren sind beispielsweise aus der WO 2011/095790 A1, der US 2015/292524 A1, der DE 195 30 423 A1, der DE 101 19 553 A1, der US 2015/240723 A1 und der WO 2013/017832 A1 bekannt.

Der vorliegenden Erfindung liegt die Aufgabe zugrunde, eine Ejektorvorrichtung bereitzustellen, welche einfach aufgebaut, kostengünstig herstellbar und mit geringem Aufwand montierbar ist.

Diese Aufgabe wird durch eine Ejektorvorrichtung gemäß dem Anspruch 1 gelöst.

Die erfindungsgemäße Ejektorvorrichtung umfasst einen Grundkörper, welcher Folgendes umfasst:
eine Saugkammer zum Ansaugen eines Saugmediums;
einen Mischkanal zum Mischen eines Treibmediums mit dem Saugmedium;
eine Treibdüsenvorrichtung zum Erzeugen eines längs einer Strahlrichtung aus der Saugkammer heraus und in den Mischkanal hinein gerichteten Treibmediumstrahls.

Die erfindungsgemäße Ejektorvorrichtung ist insbesondere eine Strahlpumpe zur Erzeugung eines Unterdrucks.

Mittels der erfindungsgemäßen Ejektorvorrichtung ist insbesondere ein Unterdruck zum Ansaugen und/oder Absaugen eines Saugmediums erzeugbar.

Nachfolgend wird auf die Funktionen Ansaugen und/oder Absaugen vereinfacht als "Ansaugen" Bezug genommen.

Die Ejektorvorrichtung kann insbesondere zum Ansaugen von ölnebelhaltigem Gas genutzt werden.

Die Ejektorvorrichtung ist dann insbesondere Bestandteil einer Ölabscheidevorrichtung, welche insbesondere in einem Fahrzeug mit Verbrennungsmotor zum Einsatz kommt.

Der Grundkörper der Ejektorvorrichtung umfasst vorzugsweise ein die Saugkammer umgebendes Saugkammerelement.

Insbesondere ist die Saugkammer als ein Innenraum des Saugkammerelements ausgebildet oder durch den Innenraum des Saugkammerelements gebildet.

Das Saugkammerelement umfasst vorzugsweise einen im Wesentlichen torusförmigen Innenraum.

Die Saugkammer ist vorzugsweise im Wesentlichen torusförmig ausgebildet.

Es kann vorgesehen sein, dass der Grundkörper alternativ oder ergänzend zu dem Saugkammerelement ein Mischkanalelement umfasst.

Das Mischkanalelement umgibt vorzugsweise den Mischkanal.

Insbesondere ist der Mischkanal durch einen Innenraum des Mischkanalelements gebildet oder als ein Innenraum des Mischkanalelements ausgebildet.

Günstig kann es sein, wenn das Saugkammerelement und das Mischkanalelement voneinander verschiedene Bauteile sind.

Das Saugkammerelement und das Mischkanalelement sind vorzugsweise voneinander verschiedene und nach der jeweiligen einzelnen Herstellung miteinander verbundene Bauteile, insbesondere Kunststoff-Spritzgussbauteile.

Sowohl das Saugkammerelement als auch das Mischkanalelement werden vorzugsweise jeweils einstückig in einem einzigen Herstellungsschritt als Kunststoff-Spritzgussbauteil hergestellt.

Das Saugkammerelement und das Mischkanalelement sind vorzugsweise in einem Flanschbereich miteinander verbunden. Insbesondere kann vorgesehen sein, dass das Saugkammerelement und das Mischkanalelement mittels einer Schweißverbindung, einer Schraubverbindung, einer Klemmverbindung und/oder einer Rastverbindung miteinander verbunden sind.

Vorzugsweise sind das Saugkammerelement und das Mischkanalelement im Flanschbereich gasdicht miteinander verbunden.

Das Saugkammerelement und das Mischkanalelement sind vorzugsweise derart miteinander verbunden, dass die Saugkammer und der Mischkanal unmittelbar aneinander angrenzen und fluidwirksam miteinander verbunden sind.

Es kann vorgesehen sein, dass der Mischkanal, insbesondere ein Mischkanalelement des Grundkörpers, Folgendes umfasst:
einen sich verjüngenden Abschnitt, welcher sich längs der Strahlrichtung an die Saugkammer anschließt und welcher eine sich längs der Strahlrichtung kontinuierlich und/oder stetig verkleinernde Innenquerschnittsfläche aufweist, und/oder einen sich erweiternden Abschnitt, welcher sich längs der Strahlrichtung an den sich verjüngenden Abschnitt anschließt und welcher eine sich längs der Strahlrichtung kontinuierlich und/oder stetig vergrößernde Innenquerschnittsfläche aufweist.

Der sich verjüngende Abschnitt schließt sich vorzugsweise unmittelbar an die Saugkammer an.

Der sich erweiternde Abschnitt kann sich unmittelbar an den sich verjüngenden Abschnitt anschließen.

Alternativ hierzu kann jedoch auch vorgesehen sein, dass zwischen dem sich verjüngenden Abschnitt und dem sich erweiternden Abschnitt ein Zwischenabschnitt vorgesehen ist, welcher eine längs der Strahlrichtung unveränderte Innenquerschnittsfläche aufweist.

Eine Innenquerschnittsfläche ist insbesondere eine durchströmbare Fläche in einer senkrecht zur Strahlrichtung genommenen Ebene.

Der Mischkanal umfasst insbesondere einen konvergenten Abschnitt, welcher durch den sich verjüngenden Abschnitt gebildet ist und einen divergenten Abschnitt, welcher durch den sich erweiternden Abschnitt gebildet ist.

Vorzugsweise ist mittels des Mischkanals eine Lavalldüse gebildet.

Das Mischkanalelement ist insbesondere ein Lavalldüsenelement.

Es kann vorgesehen sein, dass ein Saugkammerelement des Grundkörpers ein oder mehrere oder sämtliche der folgenden Komponenten umfasst:
eine Einhausung für die Saugkammer;
einen Saugkanalanschluss;
einen Treibmediumanschluss;
eine Treibdüsenelementaufnahme;
einen Treibmediumkanal zur fluidwirksamen Verbindung des Treibmediumanschlusses mit der Treibdüsenelementaufnahme;
einen Flanschabschnitt zum Verbinden des Saugkammerelements mit einem hiervon verschiedenen Mischkanalelement des Grundkörpers;
ein oder mehrere Arretierelemente einer translativen Arretiervorrichtung einer Befestigungsvorrichtung zum Befestigen des Grundkörpers an einem Saugkanal;
ein oder mehrere Arretierelemente einer rotativen Arretiervorrichtung einer Befestigungsvorrichtung zum Befestigen des Grundkörpers an einem Saugkanal;
eine Positioniervorrichtung zur Positionierung des Saugkammerelements relativ zu einer translativen Arretiervorrichtung und/oder relativ zu einer rotativen Arretiervorrichtung.

Die Saugkammer umgibt vorzugsweise die Treibdüsenelementaufnahme, ein darin angeordnetes Treibdüsenelement und/oder einen Treibmediumkanal im Wesentlichen ringförmig, insbesondere torusförmig oder ringabschnittsförmig, insbesondere torusabschnittsförmig.

Bei einer Ausgestaltung der Erfindung kann vorgesehen sein, dass ein Mischkanalelement des Grundkörpers ein oder mehrere oder sämtliche der folgenden Komponenten umfasst:
eine Einhausung für den Mischkanal;
einen Abführanschluss;
einen Flanschabschnitt zum Verbinden des Mischkanalelements mit einem hiervon verschiedenen Saugkammerelement des Grundkörpers;
ein oder mehrere Arretierelemente einer translativen Arretiervorrichtung einer Befestigungsvorrichtung zum Befestigen des Grundkörpers an einem Saugkanal;
ein oder mehrere Arretierelemente einer rotativen Arretiervorrichtung einer Befestigungsvorrichtung zum Befestigen des Grundkörpers an einem Saugkanal;
eine Positioniervorrichtung zur Positionierung des Mischkanalelements relativ zu einer translativen Arretiervorrichtung und/oder relativ zu einer rotativen Arretiervorrichtung.

Eine Positioniervorrichtung ist insbesondere eine Kombination aus einem oder mehreren Vorsprüngen und/oder einer oder mehreren Vertiefungen zur Bewegungseinschränkung der Bewegung des Grundkörpers relativ zum Saugkanal.

Insbesondere kann eine Positioniervorrichtung dazu dienen, den Grundkörper, beispielsweise das Saugkammerelement und/oder das Mischkanalelement, in einer oder zwei oder drei Raumrichtungen oder Bewegungsfreiheitsgraden zu fixieren, um eine vollständige Fixierung in sämtlichen Freiheitsgraden mittels der Arretiervorrichtung zu ermöglichen und/oder zu ergänzen.

Ein Mischkanalelement des Grundkörpers kann insbesondere ein oder mehrere Versteifungsrippen umfassen.

Vorzugsweise ist eine Versteifungsrippe oder sind mehrere Versteifungsrippen Bestandteil einer Positioniervorrichtung.

Insbesondere können ein oder mehrere Vorsprünge der Positioniervorrichtung genutzt werden, um ein unerwünschtes Verdrehen, Verkippen, Verschieben, etc. des Mischkanalelements dadurch zu verhindern, dass ein oder mehrere Versteifungsrippen des Mischkanalelements mittels des einen oder der mehreren Vorsprünge in einer gewünschten Position gehalten werden.

Günstig kann es sein, wenn ein Saugkammerelement des Grundkörpers ein Einheitsbauteil zur Aufnahme von Treibdüsenelementen unterschiedlicher Art und/oder Größe ist.

Das Saugkammerelement des Grundkörpers kann ferner ein Einheitsbauteil zur Verbindung mit Mischkanalelementen unterschiedlicher Art und/oder Größe sein.

Ein Einheitsbauteil ist insbesondere ein universelles Gleichteil, welches für eine Vielzahl von Anwendungsmöglichkeiten, insbesondere zur Herstellung von Ejektorvorrichtungen unterschiedlicher Dimensionen und/oder Betriebsparameter, verwendbar ist.

Ein Treibdüsenelement einer Treibdüsenvorrichtung ist vorzugsweise in das Saugkammerelement integriert.

Beispielsweise kann vorgesehen sein, dass ein Treibdüsenelement der Treibdüsenvorrichtung durch die Saugkammer hindurchgeführt ist.

Das Saugkammerelement dient vorzugsweise als Basiselement für die gesamte Ejektorvorrichtung, an welcher alle für die Betriebseigenschaften funktionsrelevanten weiteren Bauteile festgelegt werden.

Vorzugsweise stellt das Saugkammerelement zugleich eine Anschlussmöglichkeit für die Zuführung des Treibmediums und/oder eine Anschlussmöglichkeit für das Saugmedium bereit.

Durch die Verwendung eines als Einheitsbauteil ausgebildeten Saugkammerelements kann insbesondere unter Minimierung von Rüstzeiten und Rüstkosten des Fertigungswerkzeugs ein kostengünstiges Standardbauteil in höheren Stückzahlen gefertigt werden.

Ein Saugkammerelement und/oder ein Mischkanalelement des Grundkörpers sind vorzugsweise als Kunststoff-Spritzgussbauteile ausgebildet und weisen vorzugsweise eine Hauptentformungsrichtung auf, welche im Wesentlichen parallel zur Strahlrichtung ist.

Erfindungsgemäß ist vorgesehen, dass die Ejektorvorrichtung eine Befestigungsvorrichtung zum Befestigen des Grundkörpers der Ejektorvorrichtung an einem Saugkanal umfasst.

Die Befestigungsvorrichtung umfasst eine translative Arretiervorrichtung zur Vermeidung einer translativen Bewegung des Grundkörpers relativ zu dem Saugkanal, insbesondere in einer parallel zu einer Mittelachse eines Anschlussstutzens des Saugkanals verlaufenden Richtung.

Die Mittelachse ist insbesondere quer, beispielsweise im Wesentlichen senkrecht, zur Strahlrichtung ausgerichtet. Der Grundkörper weist dann insbesondere eine abgewinkelte Ausgestaltung auf.

Es kann jedoch auch vorgesehen sein, dass die Mittelachse und die Strahlrichtung im Wesentlichen parallel zueinander ausgerichtet sind.

Das zugeführte Treibmedium ist dann insbesondere innerhalb des Saugkammerelements umgelenkt.

Der Anschlussstutzen des Saugkanals ist insbesondere ein Endbereich des Saugkanals, an welchem die Ejektorvorrichtung unmittelbar festgelegt wird oder festlegbar ist.

Insbesondere ist eine unmittelbare, direkte und/oder berührende Verbindung zwischen einem Saugkanalanschluss eines Saugkammerelements des Grundkörpers und dem Anschlussstutzen des Saugkanals herstellbar, um den Grundkörper der Ejektorvorrichtung an dem Saugkanal festzulegen.

Ergänzend zu der translativen Arretiervorrichtung weist die Befestigungsvorrichtung eine rotative Arretiervorrichtung auf. Eine solche rotative Arretiervorrichtung dient zur Vermeidung einer Rotation des Grundkörpers relativ zu dem Saugkanal.

Insbesondere ist mittels der rotativen Arretiervorrichtung eine Rotation des Grundkörpers der Ejektorvorrichtung um eine Mittelachse eines Anschlussstutzens des Saugkanals vermeidbar.

Die translative Arretiervorrichtung und die rotative Arretiervorrichtung sind vorzugsweise
- voneinander verschieden,
- funktional voneinander getrennt und/oder
- unabhängig voneinander betätigbar.

Unter "voneinander verschiedenen Arretiervorrichtungen" ist insbesondere zu verstehen, dass die translative Arretiervorrichtung und die rotative Arretiervorrichtung durch voneinander verschiedene Bauteile oder Bauteilabschnitte gebildet sind.

Unter "räumlich voneinander getrennten Arretiervorrichtungen" ist insbesondere zu verstehen, dass die translative Arretiervorrichtung und die rotative Arretiervorrichtung an voneinander verschiedenen Raumbereichen und/oder Abschnitten der Ejektorvorrichtung wirken, um die translative Arretierung bzw. die rotative Arretierung zu bewirken.

Unter "funktional voneinander getrennten Arretiervorrichtungen" ist insbesondere zu verstehen, dass die translative Arretiervorrichtung und die rotative Arretiervorrichtung durch funktional voneinander unabhängige Elemente gebildet sind.

Unter "unabhängig voneinander betätigbaren Arretiervorrichtungen" ist insbesondere zu verstehen, dass die translative Arretiervorrichtung unabhängig von einem Zustand der rotativen Arretiervorrichtung wahlweise in einen Freigabezustand oder in einen Arretierzustand bringbar ist oder dass die rotative Arretiervorrichtung unabhängig von einem Zustand der translativen Arretiervorrichtung wahlweise in einen Freigabezustand oder einen Arretierzustand bringbar ist.

Alternativ hierzu kann vorgesehen sein, dass die translative Arretiervorrichtung nur dann wahlweise in die Freigabestellung oder die Arretierstellung bringbar ist, wenn die rotative Arretiervorrichtung entweder in der Freigabestellung oder in der Arretierstellung angeordnet ist.

Ferner kann vorgesehen sein, dass die rotative Arretiervorrichtung lediglich dann wahlweise in die Freigabestellung oder in die Arretierstellung bringbar ist, wenn die translative Arretiervorrichtung entweder in der Freigabestellung oder in der Arretierstellung ist.

Unter "zeitlich nacheinander betätigbaren Arretiervorrichtungen" ist zu verstehen, dass die translative Arretiervorrichtung und die rotative Arretiervorrichtung nicht gleichzeitig von einer Freigabestellung in eine Arretierstellung oder von der Arretierstellung in die Freigabestellung bringbar sind.

Alternativ hierzu kann jedoch auch vorgesehen sein, dass die translative Arretiervorrichtung und die rotative Arretiervorrichtung zeitlich gleichzeitig von der Freigabestellung in die Arretierstellung oder von der Arretierstellung in die Freigabestellung bringbar sind.

Vorteilhaft kann es sein, wenn die translative Arretiervorrichtung und/oder die rotative Arretiervorrichtung jeweils ein oder mehrere Arretierelemente, insbesondere Rastelemente und/oder Rastaufnahmen, umfasst.

Die rotative Arretiervorrichtung ist insbesondere durch eine oder mehrere Rastvorrichtungen gebildet. Durch eine Verrastung kann insbesondere eine werkzeuglose Montage ohne zusätzliche Hilfsmittel, wie beispielsweise Schrauben, ermöglicht werden.

Ein oder mehrere Arretierelemente der translativen Arretiervorrichtung und/oder der rotativen Arretiervorrichtung sind vorzugsweise als Vorsprünge, insbesondere Rasthaken, ausgebildet.

Die Vorsprünge, insbesondere die Rasthaken, sind insbesondere an einem Saugkammerelement des Grundkörpers angeordnet und/oder ausgebildet.

Insbesondere sind die Vorsprünge, insbesondere die Rasthaken, einstückig mit dem Saugkammerelement ausgebildet und/oder an denselben angeformt.

Anstelle mehrerer Vorsprünge, insbesondere mehrerer Rasthaken, kann auch vorgesehen sein, dass die translative Arretiervorrichtung und/oder die rotative Arretiervorrichtung lediglich einen einzigen Vorsprung, insbesondere lediglich einen einzigen Rasthaken, umfasst.

Ein Rasthaken kann insbesondere ein Schnapphaken oder ähnliches sein.

Ein oder mehrerer Arretierelemente der translativen Arretiervorrichtung und/oder der rotativen Arretiervorrichtung sind vorzugsweise als Vorsprünge, insbesondere als Rasthaken, ausgebildet und an einem Mischkanalelement des Grundkörpers angeordnet, insbesondere einstückig mit demselben ausgebildet oder an denselben angeformt.

Es kann vorgesehen sein, dass ein Arretierelement der translativen Arretiervorrichtung als eine ringförmige Wulst oder Verdickung, insbesondere als ein Rastring, an einer Außenseite eines Anschlussstutzens des Saugkanals ausgebildet ist.

Insbesondere ist eine solche ringförmige Wulst oder Verdickung mittels eines oder mehrerer Rasthaken hintergreifbar, um eine translative Arretierung zu erzielen. Aufgrund der ringförmigen Ausgestaltung der Wulst oder Verdickung kann insbesondere trotz der translativen Arretierung noch eine rotative Bewegung (Drehung) möglich sein.

Alternativ zu einer Festlegung von als Vorsprünge, insbesondere als Rasthaken, ausgebildeten Arretierelementen an einem als ringförmige Wulst oder Verdickung ausgebildeten Arretierelement kann die Festlegung an oder in einer oder mehreren Vertiefungen vorgesehen sein. Die eine oder die mehreren Vertiefungen bilden dann insbesondere ebenfalls Arretierelemente, insbesondere Arretierelemente der translativen Arretiervorrichtung und/oder der rotativen Arretiervorrichtung.

Insbesondere sind Paare aus Arretierelementen, beispielsweise jeweils ein Rasthaken und eine Vertiefung, zur Realisierung der Arretierwirkung vorgesehen.

Die in der vorliegenden Beschreibung und den beigefügten Ansprüchen beschriebenen sowie in den beigefügten Zeichnungen dargestellten Positionen der Arretierelemente können beliebig gewählt sein, insbesondere können die als Vorsprünge, beispielsweise als Rasthaken, ausgebildeten Arretierelemente durch als Vertiefungen oder ringförmige Wulst oder Verdickung ausgebildete Arretierelemente ersetzt werden, wenn im Gegenzug die als Vertiefungen oder als ringförmige Wulst oder Verdickung ausgebildeten Arretierelemente durch Vorsprünge, insbesondere Rasthaken, ersetzt werden.

Es ist demnach für die Erfindung unerheblich, ob beispielsweise als Vorsprünge ausgebildete Arretierelemente des Grundkörpers in entsprechende Vertiefungen in dem Saugkanal eingreifen oder aber als Vorsprünge ausgebildete Arretierelemente des Saugkanals in entsprechende Vertiefungen im Grundkörper eingreifen.

Bei einer Ausgestaltung der Erfindung kann vorgesehen sein, dass ein oder mehrere Arretierelemente der translativen Arretiervorrichtung und/oder der rotativen Arretiervorrichtung als Vertiefungen in einem Anschlussstutzen des Saugkanals ausgebildet sind.

Die eine oder die mehreren Vertiefungen sind insbesondere hinter einem als ringförmige Wulst oder Verdickung ausgebildeten Arretierelement der translativen Arretiervorrichtung angeordnet.

Als Vorsprünge, insbesondere Rasthaken, ausgebildete Arretierelemente, welche an dem Grundkörper der Ejektorvorrichtung angeordnet sind, können dann beispielsweise das als ringförmige Wulst oder Verdickung ausgebildete Arretierelement hintergreifen, um die translative Arretierung zu bewirken. Durch anschließendes Verdrehen des Grundkörpers relativ zu dem Saugkanal können dann die Vorsprünge, insbesondere Rasthaken in die Vertiefungen in dem Anschlussstutzen geführt werden, um schließlich die rotative Arretierung zu bewirken.

Günstig kann es sein, wenn ein oder mehrere Arretierelemente der translativen Arretiervorrichtung und/oder der rotativen Arretiervorrichtung an einer der Saugkammer abgewandten Hälfte des Mischkanalelements, insbesondere an einem der Saugkammer abgewandten Endbereich des Mischkanalelements, angeordnet sind. Hierdurch kann insbesondere eine vergrößerte Hebelwirkung genutzt werden, um den Grundkörper aufgrund des von der Mittelachse des Anschlussstutzens beabstandeten Angriffspunkts der Arretierelemente stabil festzulegen.

Bei einer Ausgestaltung der Erfindung kann vorgesehen sein, dass die Ejektorvorrichtung eine Befestigungsvorrichtung umfasst, mittels welcher der Grundkörper zunächst durch eine Translationsbewegung längs einer Translationsrichtung auf einen Anschlussstutzen eines Saugkanals aufschiebbar ist und mittels welcher der Grundkörper anschließend um eine Mittelachse des Anschlussstutzens drehbar und hierdurch in einer Drehausrichtung relativ zu dem Anschlussstutzen festlegbar ist.

Hierdurch ist insbesondere eine Drehausrichtung des Grundkörpers beim Aufschieben desselben auf den Anschlussstutzen in einem weiten Bereich frei wählbar. Dies kann die Montage der Ejektorvorrichtung vereinfachen.

Die Translationsrichtung ist insbesondere eine parallel zur Mittelachse des Anschlussstutzens verlaufende Richtung.

Es kann vorgesehen sein, dass der Anschlussstutzen und/oder ein Saugkanalanschluss des Saugkammerelements eine Dichtelementaufnahme zur Aufnahme eines Dichtelements, insbesondere eines O-Rings, umfasst. Die Dichtelementaufnahme kann insbesondere durch eine ringförmige Nut gebildet sein.

Mittels eines in der Dichtelementaufnahme aufgenommenen Dichtelements kann insbesondere eine zuverlässige Abdichtung im Übergangsbereich zwischen dem Saugkanal und dem Grundkörper der Ejektorvorrichtung gewährleistet werden.

Insbesondere dann, wenn die Ejektorvorrichtung besonders leicht und kostengünstig herstellbar sein soll, sind mehrere Bauteile der Ejektorvorrichtung vorzugsweise aus einem Kunststoffmaterial gebildet.

Auch ein Treibdüsenelement der Treibdüsenvorrichtung ist vorzugsweise aus einem Kunststoffmaterial gebildet.

Es kann jedoch auch vorgesehen sein, dass ein Treibdüsenelement der Treibdüsenvorrichtung aus einem metallischen Material gebildet ist.

Insbesondere kann vorgesehen sein, dass das Treibdüsenelement ein metallisches Material, beispielsweise Messing, umfasst oder aus einem metallischen Material, insbesondere Messing, gebildet ist.

Das Treibdüsenelement ist vorzugsweise aus einem Material gebildet, welches härter und/oder standfester ist als ein Material, aus welchem das Saugkammerelement gebildet ist.

Das Treibdüsenelement kann beispielsweise aus einem im Vergleich zu einem Kunststoffmaterial des Saugkammerelements härteren Kunststoffmaterial gebildet sein. Beispielsweise kann vorgesehen sein, dass das Saugkammerelement aus einem spritzgießbaren thermoplastischen Kunststoffmaterial gebildet ist und dass das Treibdüsenelement aus einem insbesondere hochfesten Kunststoffmaterial und/oder PEEK-Material gebildet ist.

Es kann vorgesehen sein, dass das Treibdüsenelement aus einem keramischen Material gebildet ist oder ein keramisches Material umfasst.

Das Treibdüsenelement ist vorzugsweise in das Saugkammerelement eingebettet.

Es kann vorgesehen sein, dass das Treibdüsenelement an oder in einer Treibdüsenelementaufnahme des Saugkammerelements angeordnet oder anordenbar ist.

Die Treibdüsenelementaufnahme kann beispielsweise ein Gewindeinsert im Saugkammerelement sein.

Ferner kann die Treibdüsenelementaufnahme durch das Saugkammerelement selbst gebildet sein.

Das Treibdüsenelement ist vorzugsweise einstückig ausgebildet, insbesondere als ein Metalldrehteil.

Die Treibdüsenelementaufnahme ist vorzugsweise ein aus einem Kunststoffmaterial gebildeter Abschnitt des Saugkammerelements.

Insbesondere kann vorgesehen sein, dass die Ejektorvorrichtung ein als Kunststoff-Spritzgussbauteil ausgebildetes Saugkammerelement und ein unmittelbar in das Saugkammerelement eingebettetes Treibdüsenelement umfasst.

Das Treibdüsenelement ist vorzugsweise ein separates, stabiles und/oder langzeitbeständiges Bauteil, welches eine hohe Dimensionsstabilität sowie ein gutes Präzisions- und Abrasionsverhalten aufweist.

Vorzugsweise ergib sich durch direktes Fügen zum Kunststoff eine ausreichende Dichtheitseigenschaft.

Das Treibdüsenelement kann beispielsweise durch Umspritzen desselben während der Herstellung des Saugkammerelements in dem Saugkammerelement festgelegt werden.

Alternativ oder ergänzend hierzu kann vorgesehen sein, dass das Treibdüsenelement durch Heißeinbetten in das zuvor fertiggestellte Saugkammerelement in dem Saugkammerelement festgelegt wird.

Zudem kann vorgesehen sein, dass das Treibdüsenelement durch Kalteinpressen in das zuvor fertiggestellte Saugkammerelement in dem Saugkammerelement festgelegt wird.

Die vorstehend beschriebene Ejektorvorrichtung eignet sich insbesondere zur Verwendung in einer Kombination aus einer Zylinderkopfhaube und einer Ejektorvorrichtung.

Die Kombination weist vorzugsweise einzelne oder mehrere der im Zusammenhang mit der erfindungsgemäßen Ejektorvorrichtung beschriebenen Merkmale und/oder Vorteile auf.

Günstig kann es sein, wenn die Zylinderkopfhaube ein oder mehrere Arretierelemente einer translativen Arretiervorrichtung und/oder ein oder mehrere Arretierelemente einer rotativen Arretiervorrichtung umfasst.

Das eine oder die mehreren Arretierelemente der translativen Arretiervorrichtung und/oder das eine oder die mehreren Arretierelemente der rotativen Arretiervorrichtung sind vorzugsweise zur translativen und/oder rotativen Arretierung des Grundkörpers der Ejektorvorrichtung relativ zu der Zylinderkopfhaube mit einem oder mehreren an dem Grundkörper angeordneten Arretierelementen der translativen Arretiervorrichtung und/oder der rotativen Arretiervorrichtung in Eingriff bringbar, insbesondere verrastend in Eingriff bringbar.

Die Zylinderkopfhaube ist oder umfasst vorzugsweise ein Kunststoff-Spritzgussbauteil.

Insbesondere umfasst die Zylinderkopfhaube einen einstückigen Haubenkörper zur Abdeckung eines Ventilraums eines Verbrennungsmotors.

Der Haubenkörper ist insbesondere ein Kunststoff-Spritzgussbauteil, an welchen ein oder mehrere Arretierelemente angeformt sind oder welcher ein oder mehrere Arretierelemente einstückig umfasst.

Die translative Arretiervorrichtung umfasst mindestens eine Rastvorrichtung oder ist durch mindestens eine Rastvorrichtung gebildet.

Der Begriff "Rastvorrichtung" umfasst insbesondere auch eine Schnappverbindung, Clipsverbindung, etc.

Unter einem "Rasten" ist in dieser Beschreibung und den beigefügten Ansprüchen insbesondere ein Vorbeibewegen zweier Rastelemente aneinander zu verstehen, um die Rastelemente bezüglich einer Arretierrichtung einander hintergreifend aneinander festzulegen.

Eine hintergreifende Festlegung ist insbesondere eine nicht lösbare Verbindung derart, dass sich die Rastelemente durch Auseinanderziehen derselben längs der Arretierrichtung nicht voneinander trennen lassen.

Zum Verrasten von Rastelementen wird insbesondere ein Widerstand überwunden, um die Rastelemente bezüglich der Arretierrichtung formschlüssig miteinander zu verbinden. Eine Zurückbewegung wird dann durch die hintergreifende Festlegung verhindert.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung eines Grundkörpers einer Ejektorvorrichtung;
- Fig. 2: eine schematische perspektivische Darstellung eines Saugkammerelements des Grundkörpers der Ejektorvorrichtung aus Fig. 1;
- Fig. 3: eine schematische perspektivische Darstellung eines Treibdüsenelements einer Treibdüsenvorrichtung des Grundkörpers der Ejektorvorrichtung aus Fig. 1;
- Fig. 4: eine schematische perspektivische Darstellung eines Mischkanalelements des Grundkörpers der Ejektorvorrichtung aus Fig. 1;
- Fig. 5: einen schematischen Längsschnitt durch den Grundkörper aus Fig. 1;
- Fig. 6: eine schematische perspektivische Darstellung der Ejektorvorrichtung aus Fig. 1 und einer teilweise dargestellten Zylinderkopfhaube, an welcher die Ejektorvorrichtung festlegbar ist, wobei die Ejektorvorrichtung von der Zylinderkopfhaube beabstandet ist;
- Fig. 7: eine der Fig. 6 entsprechende schematische Darstellung der Ejektorvorrichtung und der Zylinderkopfhaube, wobei die Ejektorvorrichtung auf einen Saugkanal der Zylinderkopfhaube aufgeschoben und an demselben verrastet ist;
- Fig. 8: eine vergrößerte Darstellung eines Anschlussstutzens des Saugkanals samt des daran befestigten Teils der Ejektorvorrichtung;
- Fig. 9: eine weitere schematische perspektivische Darstellung der Ejektorvorrichtung und der Zylinderkopfhaube in dem in Fig. 7 dargestellten Zustand;
- Fig. 10: eine schematische perspektivische Darstellung der Ejektorvorrichtung und der Zylinderkopfhaube, wobei die Ejektorvorrichtung einerseits mittels einer translativen Arretiervorrichtung an dem Saugkanal und andererseits mittels einer rotativen Arretiervorrichtung an einem Haubenkörper der Zylinderkopfhaube festgelegt ist;
- Fig. 11: eine vergrößerte Darstellung der rotativen Arretiervorrichtung aus Fig. 10;
- Fig. 12: eine schematische perspektivische Darstellung einer zweiten Ausführungsform einer Ejektorvorrichtung samt einer Zylinderkopfhaube zur Festlegung der Ejektorvorrichtung, wobei eine am Saugstutzen des Saugkanals wirkende rotative Arretiervorrichtung vorgesehen ist;
- Fig. 13: eine schematische Seitenansicht eines Saugkammerelements des Grundkörpers der Ejektorvorrichtung und eines Anschlussstutzens des Saugkanals der Kombination aus Ejektorvorrichtung und Zylinderkopfhaube aus Fig. 12;
- Fig. 14: eine schematische Draufsicht von oben auf die Kombination aus Ejektorvorrichtung und Zylinderkopfhaube gemäß Fig. 13;
- Fig. 15: einen schematischen Schnitt durch den Anschlussstutzen des Saugkanals und den sich daran anschließenden Teil des Saugkammerelements des Grundkörpers der Kombination aus Fig. 12;
- Fig. 16: eine schematische perspektivische Darstellung der Kombination aus Ejektorvorrichtung und Zylinderkopfhaube gemäß Fig. 12, wobei der Grundkörper der Ejektorvorrichtung von dem Saugkanal getrennt ist;
- Fig. 17: eine schematische Schnittdarstellung einer Ausführungsform einer Treibdüsenvorrichtung; und
- Fig. 18: eine der Fig. 17 entsprechende schematische Darstellung einer weiteren Ausführungsform einer Treibdüsenvorrichtung.

Gleiche oder funktional äquivalente Elemente sind in sämtlichen Figuren mit denselben Bezugszeichen versehen.

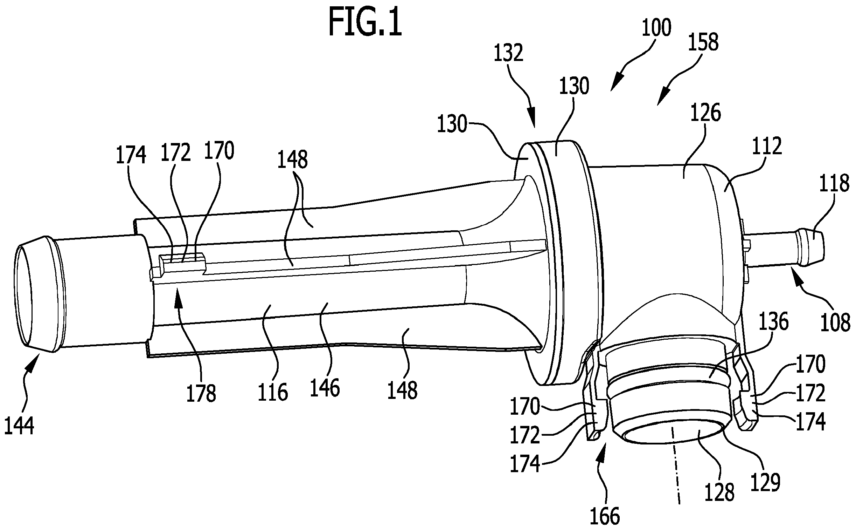

Eine in den Fig. 1 bis 11 dargestellte erste Ausführungsform einer als Ganzes mit 100 bezeichneten Ejektorvorrichtung kommt beispielsweise im Kraftfahrzeugbau zum Einsatz. Die Ejektorvorrichtung 100 dient dabei insbesondere als Saugvorrichtung zum Absaugen oder Ansaugen von ölnebelhaltigem Gas aus einem Kurbelgehäuse eines Verbrennungsmotors.

Die Ejektorvorrichtung 100 ist hierzu insbesondere an einer Zylinderkopfhaube 102 des Verbrennungsmotors angeordnet.

Zunächst wird nachfolgend auf die Details der Ejektorvorrichtung 100 eingegangen. Im weiteren Verlauf wird die Befestigung derselben an der Zylinderkopfhaube 102 erläutert.

Die Ejektorvorrichtung 100 umfasst eine Saugkammer 104 zur Ansaugung eines Saugmediums, insbesondere ölnebelhaltigem Gas.

Ferner umfasst die Ejektorvorrichtung 100 einen Mischkanal 106 und eine Treibdüsenvorrichtung 108.

Mittels der Treibdüsenvorrichtung 108 ist ein Strahl aus einem Treibmedium erzeugbar.

Dieser Strahl ist aus der Saugkammer 104 heraus und in den Mischkanal 106 richtbar, wodurch sich ein Saugeffekt in der Saugkammer 104 erzeugen lässt.

Die Saugkammer 104 ist insbesondere im Wesentlichen ringförmig oder torusförmig ausgebildet und umgibt die Treibdüsenvorrichtung 108 im Wesentlichen ringförmig oder torusförmig.

Die Saugkammer 104 ist insbesondere ein Innenraum 110 eines Saugkammerelements 112.

Der Mischkanal 106 ist insbesondere ein Innenraum 114 eines Mischkanalelements 116.

Das Saugkammerelement 112 umfasst ferner einen Treibmediumanschluss 118, über welchen der Treibdüsenvorrichtung 108 Treibmedium zuführbar ist.

Ferner umfasst das Saugkammerelement 112 vorzugsweise einen Treibmediumkanal 120, mittels welchem das über den Treibmediumanschluss 118 zugeführte Treibmedium einem Treibdüsenelement 122 der Treibdüsenvorrichtung 108 zuführbar ist.

Das Treibdüsenelement 122 ist insbesondere Bestandteil des Saugkammerelements 112 oder ein in das Saugkammerelement 112 eingebettetes weiteres Bauteil.

Insbesondere ist das Treibdüsenelement 122 ein metallisches Bauteil, insbesondere aus Messing, welches durch Umspritzen, Heißeinbetten oder Kalteinpressen an oder in dem Saugkammerelement 112 festgelegt ist.

Das Saugkammerelement 112 bildet dabei insbesondere eine Treibdüsenelementaufnahme 124 zur Aufnahme des Treibdüsenelements 122.

Das Saugkammerelement 112 bildet vorzugsweise eine Einhausung 126 für die Saugkammer 104.

In der Einhausung 126 ist vorzugsweise eine Saugöffnung 128 vorgesehen.

Diese Saugöffnung 128 ist insbesondere Bestandteil eines Saugkanalanschlusses 129 zur Verbindung des Saugkammerelements 112 mit einem noch zu beschreibenden Saugkanal.

Das Saugkammerelement 112 umfasst ferner einen Flanschabschnitt 130 zur Verbindung des Saugkammerelements 112 mit dem Mischkanalelement 116.

Der Flanschabschnitt 130 ist somit insbesondere ein Verbindungsabschnitt 132.

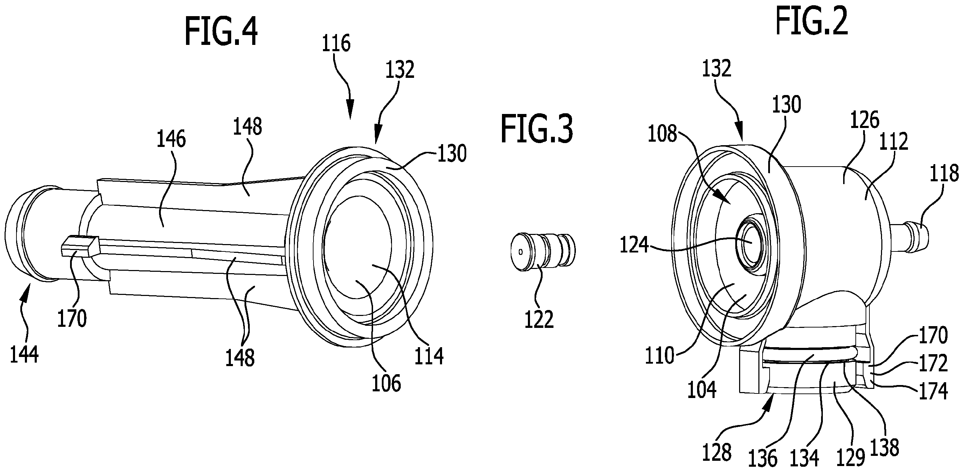

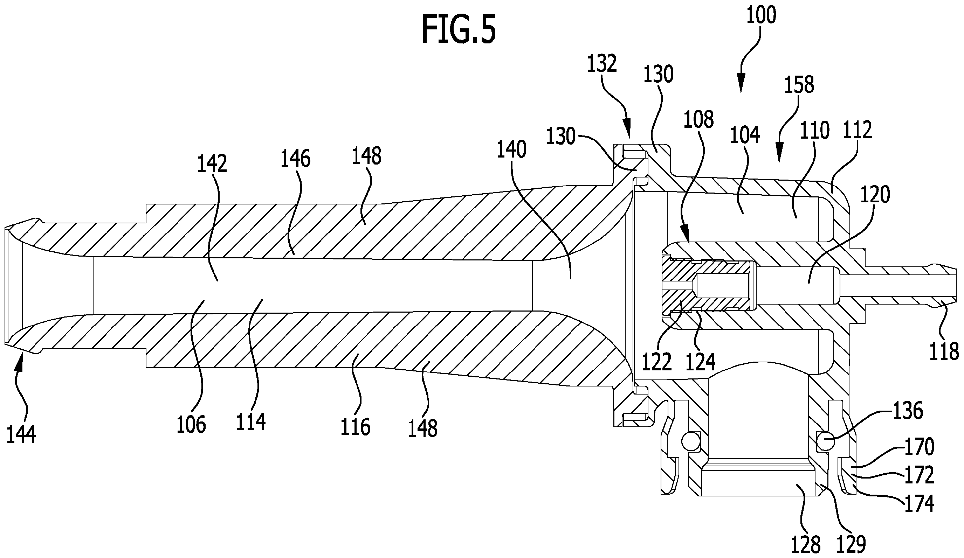

Wie insbesondere Fig. 2 zu entnehmen ist, umfasst der Saugkanalanschluss 129 des Saugkammerelements 112 vorzugsweise eine Dichtelementaufnahme 134 zur Aufnahme eines Dichtelements 136 (siehe insbesondere Fig. 5).

Die Dichtelementaufnahme 134 ist insbesondere eine ringförmig Nut 138 an oder in einem in den Saugkanal einzuschiebenden oder auf denselben aufzusetzenden Abschnitt des Saugkanalanschlusses 129.

Wie Fig. 5 ferner zu entnehmen ist, umfasst der Mischkanal 106 einen sich verjüngenden Abschnitt 140, welcher sich insbesondere an die Saugkammer 104 anschließt.

Zudem umfasst der Mischkanal 106 einen sich erweiternden Abschnitt 142, welcher sich insbesondere an den sich verjüngenden Abschnitt 140 anschließt.

Zwei einander gegenüberliegende Enden des den Mischkanal 106 bildenden oder umgebenden Mischkanalelements 116 sind einerseits durch einen Flanschabschnitt 130 des Mischkanalelements 116 und andererseits durch einen Abführanschluss 144 des Mischkanalelements 116 gebildet.

Das Mischkanalelement 116 bildet insbesondere eine Einhausung 146 für den Mischkanal 106.

Wie insbesondere den Fig. 1 und 4 zu entnehmen ist, umfasst das Mischkanalelement 116 eine oder mehrere Versteifungsrippen 148, welche insbesondere sternförmig von der Einhausung 146 des Mischkanals 106 radial nach außen weg ragen.

Wie Fig. 5 zu entnehmen ist, sind das Saugkammerelement 112 und das Mischkanalelement 116 mit ihren jeweiligen Flanschabschnitten 130 miteinander verbunden, beispielsweise verschweißt.

Nachfolgend wird nun auf die Zylinderkopfhaube 102 und die Festlegung der Ejektorvorrichtung 100 an der Zylinderkopfhaube 102 eingegangen.

Die Ejektorvorrichtung 100 kann jedoch auf vergleichbare Art und Weise an beliebigen anderen Bauteilen und Vorrichtungen festgelegt werden.

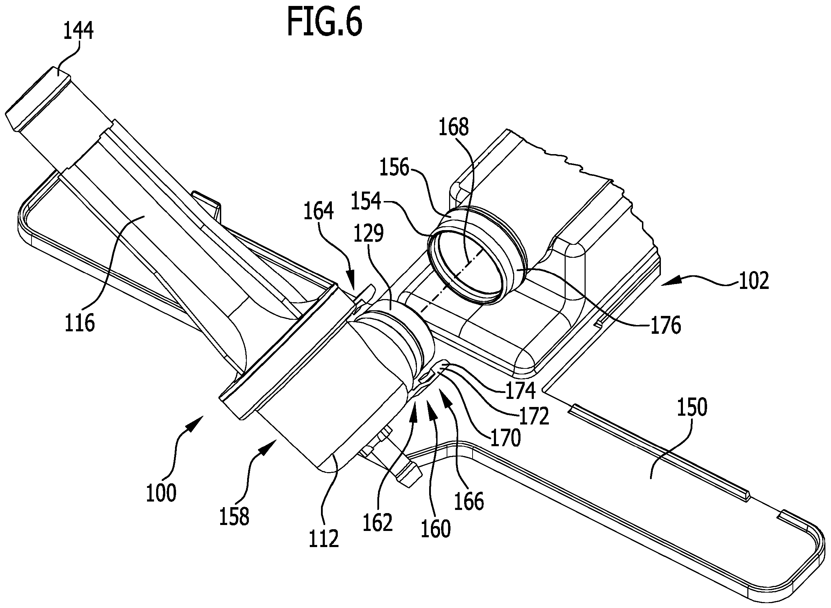

Wie insbesondere den Fig. 6 bis 11 zu entnehmen ist, umfasst die Zylinderkopfhaube 102 insbesondere einen Haubenkörper 150, welcher insbesondere einen Ventilraum eines Verbrennungsmotors abdeckt.

Der Haubenkörper 150 ist insbesondere als ein Spritzguss-Kunststoffbauteil ausgebildet.

Vorzugsweise umfasst die Zylinderkopfhaube 102 ferner einen Saugkanal 152, über welchen Gas, insbesondere ölnebelhaltiges Gas, aus einem Kurbelgehäuse und/oder einem sonstigen mit Ölnebel beaufschlagten Teil des Verbrennungsmotors abführbar ist.

Ein Ende 154 des Saugkanals 152 bildet insbesondere einen Anschlussstutzen 156 zum Anschließen und/oder Verbinden und/oder Festlegen der Ejektorvorrichtung 100.

Die Ejektorvorrichtung 100 kann den Saugkanal 152 umfassen.

Zur einfachen Bezugnahme und Erläuterung wird nachfolgend anstelle der gesamten Ejektorvorrichtung 100 auf einen Grundkörper 158 der Ejektorvorrichtung 100 Bezug genommen.

Dieser Grundkörper 158 ist insbesondere gebildet durch das Saugkammerelement 112, das Mischkanalelement 116 und die Treibdüsenvorrichtung 108, insbesondere das Treibdüsenelement 122.

Gegebenenfalls kann auch das Dichtelement 136 Bestandteil des Grundkörpers 158 oder aber an demselben festgelegt sein.

Zur Befestigung des Grundkörpers 158 der Ejektorvorrichtung 100 an der Zylinderkopfhaube 102 ist insbesondere eine Befestigungsvorrichtung 160 der Ejektorvorrichtung 100 vorgesehen.

Die Befestigungsvorrichtung 160 umfasst insbesondere eine oder mehrere Arretiervorrichtungen 162, welche vorzugsweise als Rastvorrichtungen 164 ausgebildet sind.

Vorzugsweise umfasst die Befestigungsvorrichtung 160 eine translative Arretiervorrichtung 166 zur Festlegung des Grundkörpers 158 an dem Saugkanal 152 derart, dass eine Verschiebung des Grundkörpers 158 relativ zu dem Saugkanal 152 längs einer Mittelachse 168 des Anschlussstutzens 156 wirksam verhindert ist.

Mittels der translativen Arretiervorrichtung 166 kann der Grundkörper 158 vorzugsweise derart auf den Saugkanal 152 aufgeschoben und an dem Saugkanal 152 festgelegt werden, dass der Grundkörper 158 nicht mehr entgegen einer Aufschieberichtung von dem Saugkanal 152 abgezogen werden kann (zumindest nicht ohne eine spezielle Betätigung der translativen Arretiervorrichtung 166).

Die translative Arretiervorrichtung 166 umfasst insbesondere ein oder mehrere Arretierelemente 170.

Ein Arretierelement 170 der translativen Arretiervorrichtung 166 ist insbesondere als ein Rastelement 172, beispielsweise als ein Rasthaken 174 ausgebildet.

Vorzugsweise sind mehrere derartige Arretierelemente 170 vorgesehen.

Insbesondere umfasst die translative Arretiervorrichtung 166 zwei als Rasthaken 174 ausgebildete Arretierelemente 170.

Ferner umfasst die translative Arretiervorrichtung 166 vorzugsweise ein als Rastring 176 ausgebildetes Arretierelement 170.

Die als Rasthaken 174 ausgebildeten Arretierelemente 170 sind vorzugsweise mit dem als Rastring 176 ausgebildeten Arretierelement 170 verrastbar, um die translative Arretierung zu realisieren.

Die Rasthaken 174 sind vorzugsweise an dem Saugkammerelement 112 des Grundkörpers 158 angeordnet und/oder ausgebildet.

Der Rastring 176 ist vorzugsweise an dem Anschlussstutzen 156 des Saugkanals 152 angeordnet und/oder ausgebildet.

Es kann jedoch auch eine umgekehrte Anordnung derart vorgesehen sein, dass die Rasthaken 174 an dem Anschlussstutzen 156 des Saugkanals 152 angeordnet und/oder ausgebildet sind, während der Rastring 156 an dem Saugkammerelement 112 des Grundkörpers 158 angeordnet und/oder ausgebildet ist.

Mittels der Rasthaken 174 ist der Rastring 156 vorzugsweise formschlüssig längs der Mittelachse 168 hintergreifbar.

Der Rastring 176 ist vorzugsweise rotationssymmetrisch ausgebildet.

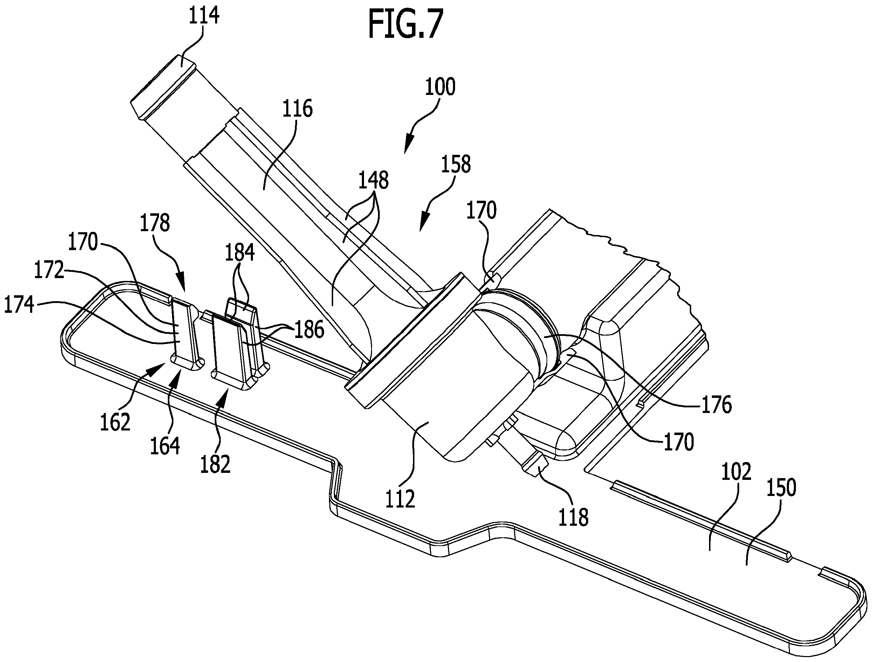

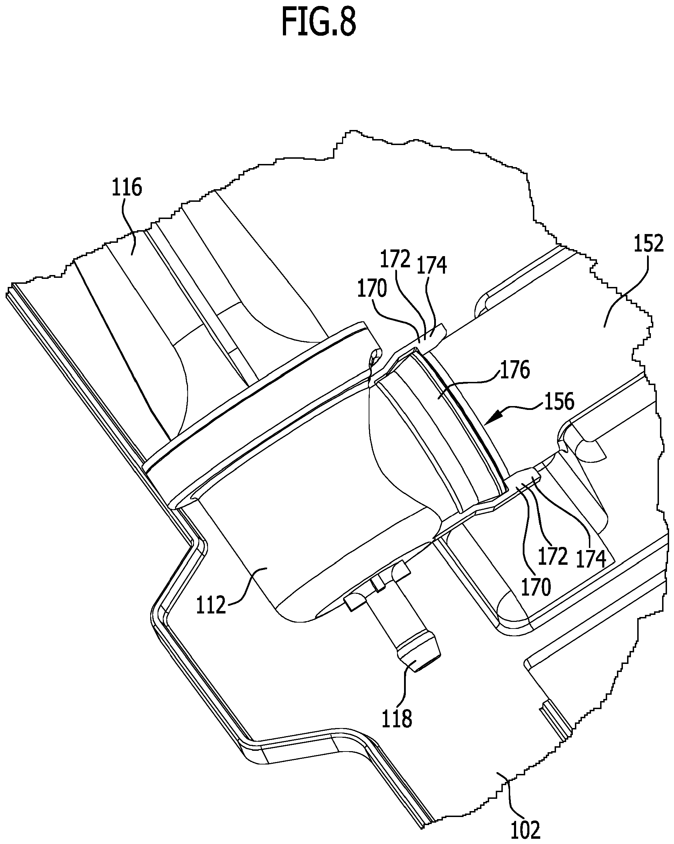

In dem in den Fig. 7 und 8 dargestellten translativ arretierten Zustand des Grundkörpers 158 der Ejektorvorrichtung 100 an der Zylinderkopfhaube 102 ist somit vorzugsweise nach wie vor eine Drehbewegung des Grundköpers 158 um die Mittelachse 168 möglich.

Der Grundkörper 158 kann somit in verschiedenen Drehausrichtungen auf den Saugkanal 152 aufgesetzt werden. Im Anschluss daran und somit nach der translativen Arretierung kann dann eine weitergehende Festlegung zur Vermeidung jeglicher Relativbewegung des Grundkörpers 158 relativ zu der Zylinderkopfhaube 102 erfolgen.

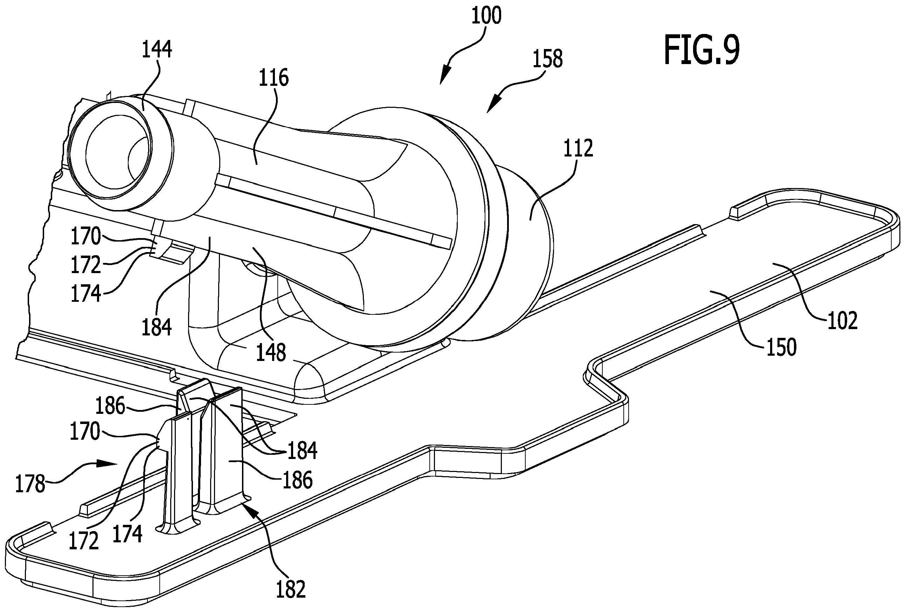

Diese weitergehende Festlegung wird insbesondere mittels einer rotativen Arretiervorrichtung 178 bewirkt (siehe die Fig. 9 bis 11).

Die rotative Arretiervorrichtung 178 umfasst vorzugsweise ein oder mehrere Arretierelemente 170.

Die Arretierelemente 170 der rotativen Arretiervorrichtung 178 sind beispielsweise als Rastelemente 172, insbesondere als Rasthaken 174 ausgebildet.

Vorzugweise ist ein als Rasthaken 174 ausgebildetes Arretierelement 170 der rotativen Arretiervorrichtung 178 an dem Mischkanalelement 116 des Grundkörpers 158 angeordnet und/oder ausgebildet.

Ein weiteres als Rasthaken 174 ausgebildetes Arretierelement 170 der rotativen Arretiervorrichtung 178 ist vorzugsweise an der Zylinderkopfhaube 102 angeordnet und/oder ausgebildet.

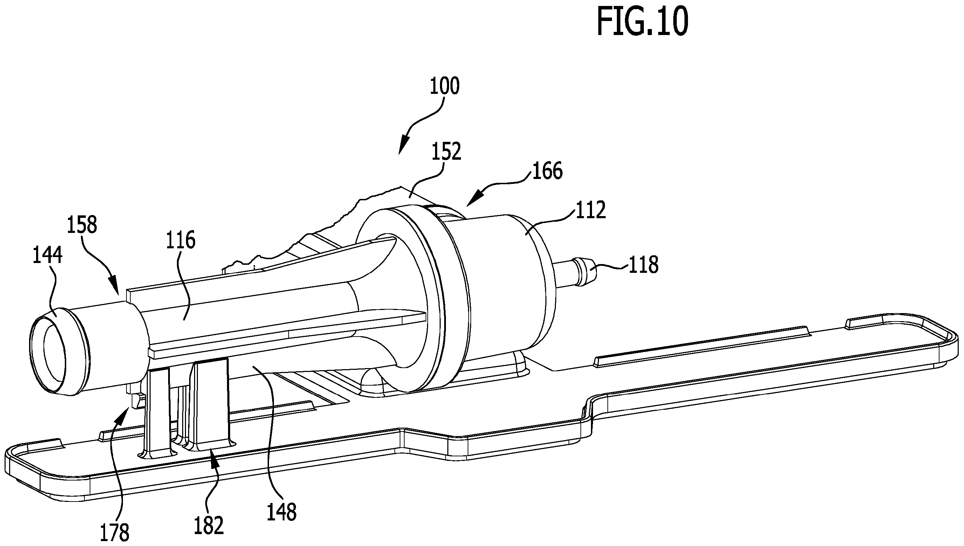

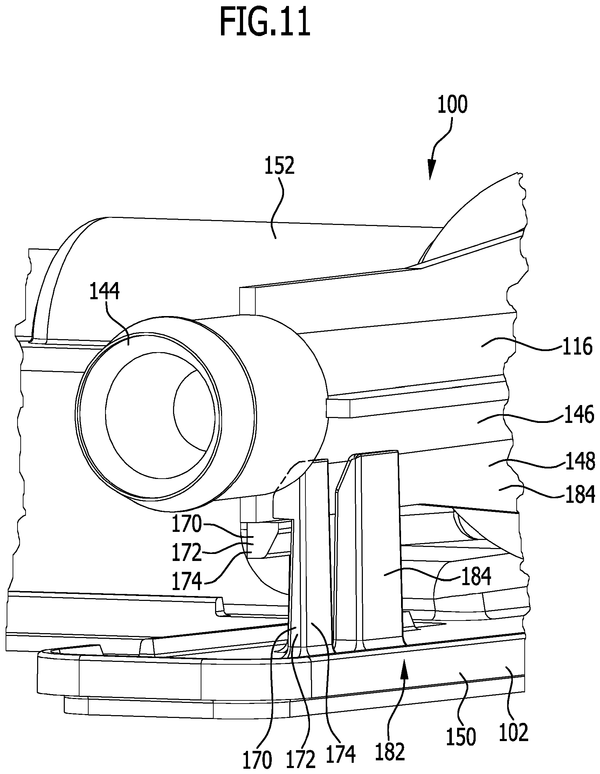

Die zwei Rasthaken 174 sind insbesondere durch eine Drehbewegung des Grundkörpers 158 um die Mittelachse 168 miteinander in Eingriff bringbar, insbesondere um den Grundkörper 158 der Ejektorvorrichtung 100 in einer vorgegebenen Drehausrichtung relativ zu dem Saugkanal 152 festzulegen (siehe insbesondere die Fig. 10 und 11).

Ein als Rasthaken 174 ausgebildetes Arretierelement 170 der rotativen Arretiervorrichtung 178 ist insbesondere an einem dem Saugkammerelement 112 abgewandten Endbereich 180 des Mischkanalelements 116 ausgebildet und/oder angeordnet. Aufgrund des sich hieraus ergebenden Abstands der rotativen Arretiervorrichtung 178 von Mittelachse 168 des Anschlussstutzens 156 des Saugkanals 152 ist eine große Hebelwirkung erhältlich, wodurch sich eine zuverlässige und sichere rotative Festlegung des Grundkörpers 158 an der Zylinderkopfhaube 102 ergibt.

Die Ejektorvorrichtung 100 kann ferner eine Positioniervorrichtung 182 umfassen.

Eine solche Positioniervorrichtung 182 dient insbesondere der zuverlässigen Positionierung des Grundkörpers 158 vor, während und/oder nach der Verrastung der Rastelemente 174 der rotativen Arretiervorrichtung 178.

Insbesondere kann mittels der Positioniervorrichtung 182 vorzugsweise vermieden werden, dass die als Rastelemente 174 ausgebildeten Arretierelemente 170 der rotativen Arretiervorrichtung 178 im Betrieb der Ejektorvorrichtung 100, insbesondere im Betrieb des Verbrennungsmotors, miteinander außer Eingriff gelangen, weil der ansonsten nicht weiter gesicherte Endbereich 180 des Mischkanalelements 116 zu starken Vibrationen oder Bewegungen unterworfen sein könnte.

Die Positioniervorrichtung 182 umfasst insbesondere ein oder mehrere Positionierelemente 184.

Beispielsweise sind zwei als Vorsprünge 186 ausgebildete Positionierelemente 184 an der Zylinderkopfhaube 102 angeordnet und/oder ausgebildet.

Zwischen diesen zwei Vorsprüngen 186 kann insbesondere eine als Positonierelement 184 dienende Versteifungsrippe 148 des Mischkanalelements 116 eingebracht werden, um letztlich das gesamte Mischkanalelement 116 und somit den Grundkörper 158 zuverlässig zu positionieren.

Der Grundkörper 158 ist insbesondere wie folgt herstellbar:
Zunächst werden vorzugsweise das Saugkammerelement 112 und das Mischkanalelement 116 als voneinander verschiedene einzelne Spritzguss-Kunststoffbauteile hergestellt.

Ferner wird das Treibdüsenelement 122 hergestellt, insbesondere durch Formgeben, beispielsweise Drehen, eines Metallteils.

In einem nächsten Schritt wird das Treibdüsenelement 122 mit dem Saugkammerelement 112 verbunden, beispielsweise durch Heißeinbetten oder Kalteinpressen.

Es kann jedoch auch vorgesehen sein, dass das Treibdüsenelement 122 durch Umspritzen desselben mit Kunststoff während der Herstellung des Saugkammerelements 112 an und/oder in dem Saugkammerelement 112 angeordnet wird.

In einem weiteren Schritt werden das Saugkammerelement 112 und das Mischkanalelement 116 miteinander verbunden.

Insbesondere werden die beiden Flanschabschnitte 130 des Saugkammerelements 112 und des Mischkanalelements 116 durch Kunststoffschweißen miteinander verschweißt.

Insbesondere ergibt sich hierbei eine gasdichte Verbindung.

Schließlich wird vorzugsweise noch ein Dichtelement 136 in der Dichtelementaufnahme 134 angeordnet.

Der auf diese Weise fertiggestellte Grundkörper 158 der Ejektorvorrichtung 100 wird dann längs der Mittelachse 168 mit dem Saugkanalanschluss 130 des Saugkammerelements 112 auf den Anschlussstutzen 156 des Saugkanals 152 aufgeschoben.

Die Rasthaken 174 der translativen Arretiervorrichtung 166 hintergreifen dabei den Rastring 176 der translativen Arretiervorrichtung 166, so dass der Grundkörper 158 gegen eine Verschiebung desselben relativ zu dem Saugkanal 152 gesichert wird.

In einem weiteren Schritt wird der Grundkörper 158 um die Mittelachse 168 des Anschlussstutzens 156 gedreht, bis die beiden als Rasthaken 174 ausgebildeten Arretierelemente 170 der rotativen Arretiervorrichtung 178 miteinander in Eingriff gelangen.

Zudem ergibt sich bei dieser Rotation des Grundkörpers 158 um die Mittelachse 168 des Anschlussstutzens 156 eine optimale Positionierung des Grundkörpers 158 dadurch, dass eine als Positionierelement 184 dienende Versteifungsrippe 148 des Mischkanalelements 116 zwischen zwei als Vorsprünge 186 ausgebildete Positionierelemente 184 eingeführt wird.

Dadurch, dass sowohl die translative Arretiervorrichtung 166 als auch die rotative Arretiervorrichtung 178 eine verrastende Festlegung des Grundkörpers 158 an der Zylinderkopfhaube 102 ermöglichen, kann diese Festlegung werkzeuglos und somit mit besonders geringem Aufwand erfolgen.

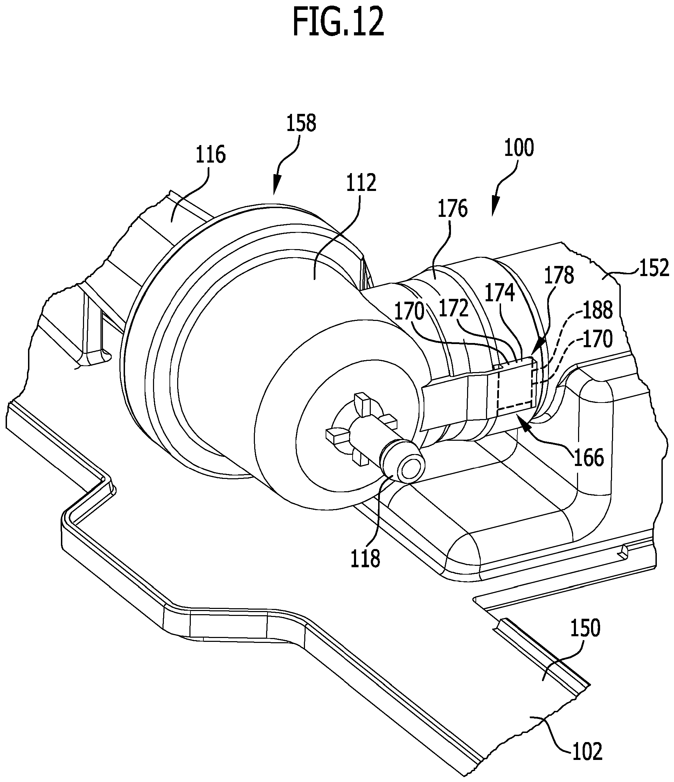

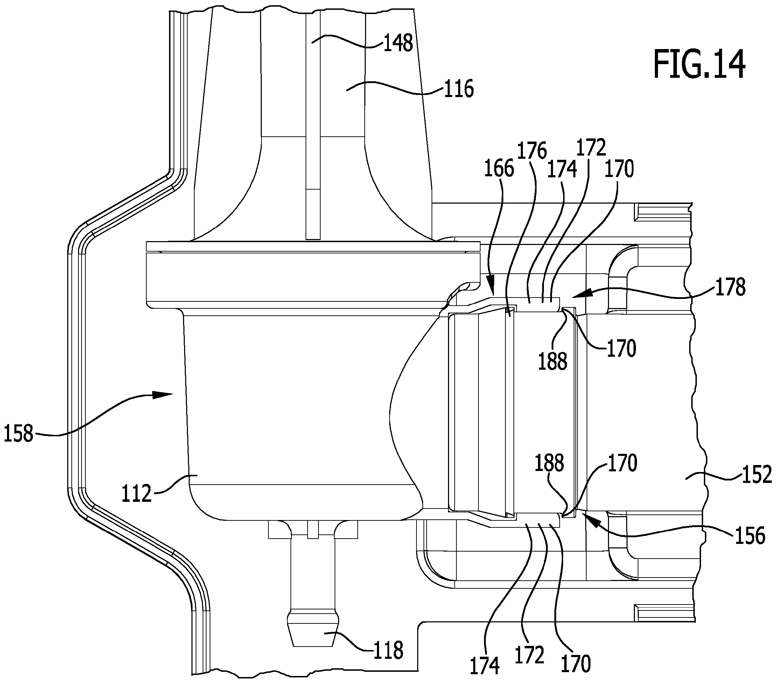

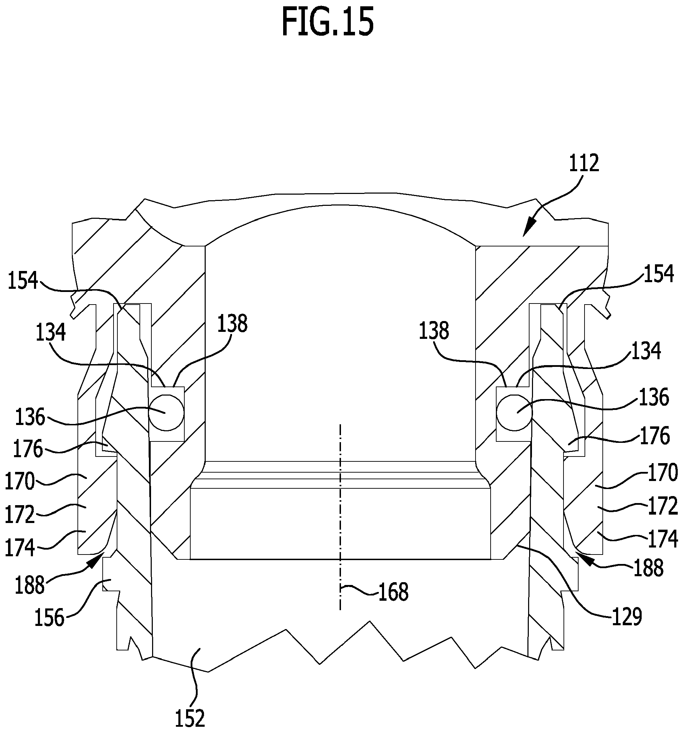

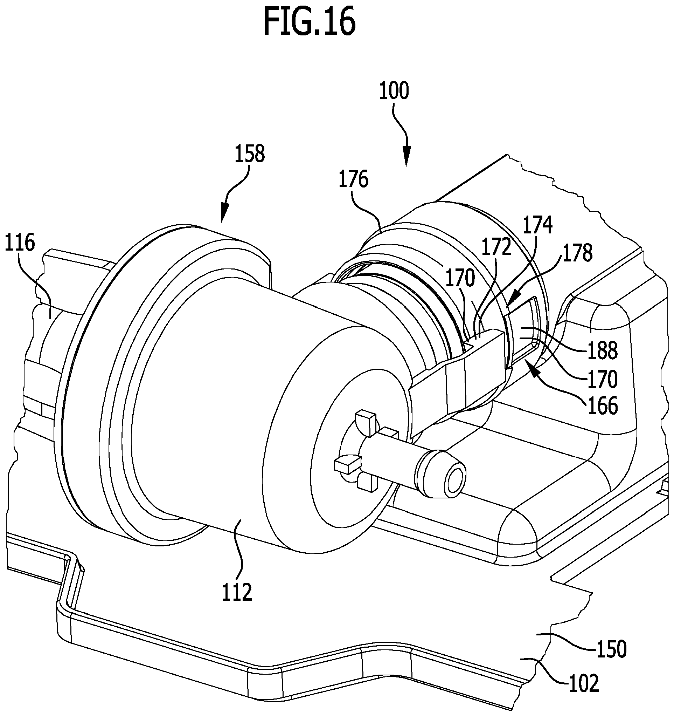

Eine in den Fig. 12 bis 16 dargestellte zweite Ausführungsform einer Ejektorvorrichtung 100 unterscheidet sich von der in den Fig. 1 bis 11 dargestellten ersten Ausführungsform im Wesentlichen dadurch, dass alternativ oder ergänzend zu der in den Fig. 1 bis 11 dargestellten rotativen Arretiervorrichtung 178 eine im Bereich des Saugkanalanschlusses 130 und des Anschlussstutzens 156 angeordnete und/oder ausgebildete rotative Arretiervorrichtung 178 vorgesehen ist.

Die rotative Arretiervorrichtung 178 wird dabei einerseits durch ein oder mehrere Arretierelemente der translativen Arretiervorrichtung 166 und andererseits durch ein oder mehrere als Vertiefungen 188 ausgebildete Arretierelemente 170 der rotativen Arretiervorrichtung 178 gebildet.

Die Arretierelemente 170, welche somit sowohl zur translativen Arretiervorrichtung 166 als auch zur rotativen Arretiervorrichtung 178 zuzuordnen sind, sind insbesondere als Rasthaken 174 ausgebildet.

Die Vertiefungen 188 sind insbesondere auf einer der Saugkammer 104 abgewandten Seite eines als Rastring 176 ausgebildeten Arretierelements 170 der translativen Arretiervorrichtung 166 angeordnet.

Die Vertiefungen 188 sind dabei nicht vollständig umlaufend, insbesondere nicht ringförmig geschlossen ausgebildet, sondern bilden lediglich lokale Vertiefungen 188 in einem vorzugsweise unmittelbar hinter dem Rastring 176 befindlichen Bereich des Anschlussstutzens 156.

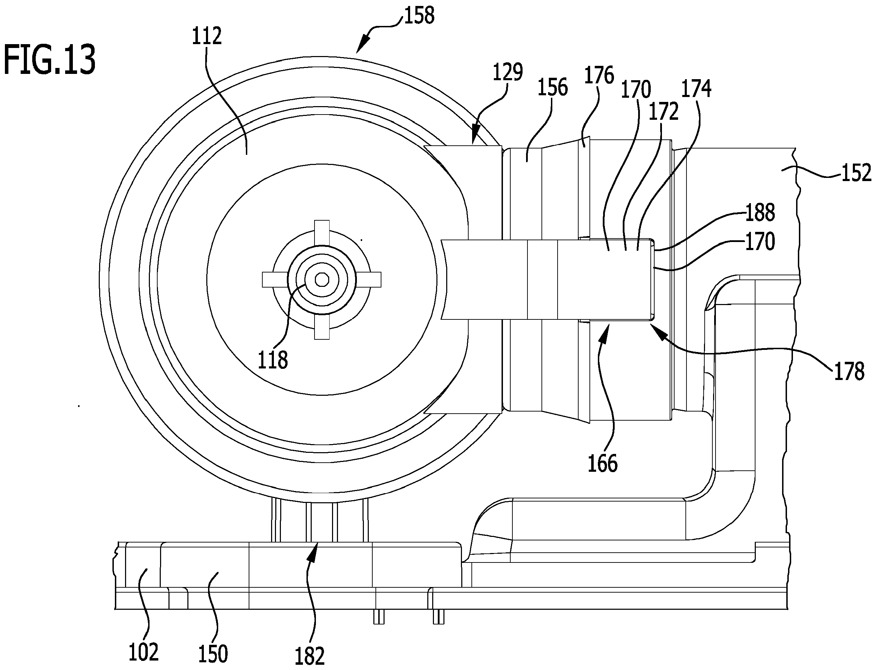

Wie insbesondere aus einem Vergleich der Fig. 12 und 13 hervorgeht, sind die als Rasthaken 174 ausgebildeten Arretierelemente 170 und die als Vertiefungen 188 ausgebildeten Arretierelemente 170 vorzugsweise derart ausgebildet und/oder angeordnet, dass diese in einer Umfangsrichtung des Anschlussstutzens 176 formschlüssig aneinander festlegbar sind.

Bei der in den Fig. 12 bis 16 dargestellten Ausführungsform der Ejektorvorrichtung 100 kann der Grundkörper 158 ebenfalls wie bei der in den Fig. 1 bis 11 dargestellten Ausführungsform in einer Vielzahl von unterschiedlichen Drehausrichtungen auf den Anschlussstutzen 156 des Saugkanals 152 aufgeschoben werden, um die translative Arretierung zu erzielen.

Anschließend kann durch eine Drehung des Grundkörpers 158 um die Mittelachse 168 des Anschlussstutzens 156 die rotative Arretierung vorgenommen werden.

Hierbei werden insbesondere die als Rasthaken 174 ausgebildeten und den Rastring 176 hintergreifenden Arretierelemente 170 solange in Umfangsrichtung bewegt, bis diese in die Vertiefungen 188 eingreifen und formschlüssig bezüglich der Umfangsrichtung in diesen festgelegt werden.

Aufgrund dieser formschlüssigen Festlegung ist dann der gesamte Grundkörper 158 relativ zu dem Saugkanal 152 gegen eine weitere Verdrehung gesichert.

Im Übrigen stimmt die in den Fig. 1 bis 16 dargestellte zweite Ausführungsform der Ejektorvorrichtung 100 hinsichtlich Aufbau und Funktion mit der in den Fig. 1 bis 11 dargestellten ersten Ausführungsform überein, so dass auf deren vorstehende Beschreibung insoweit Bezug genommen wird.

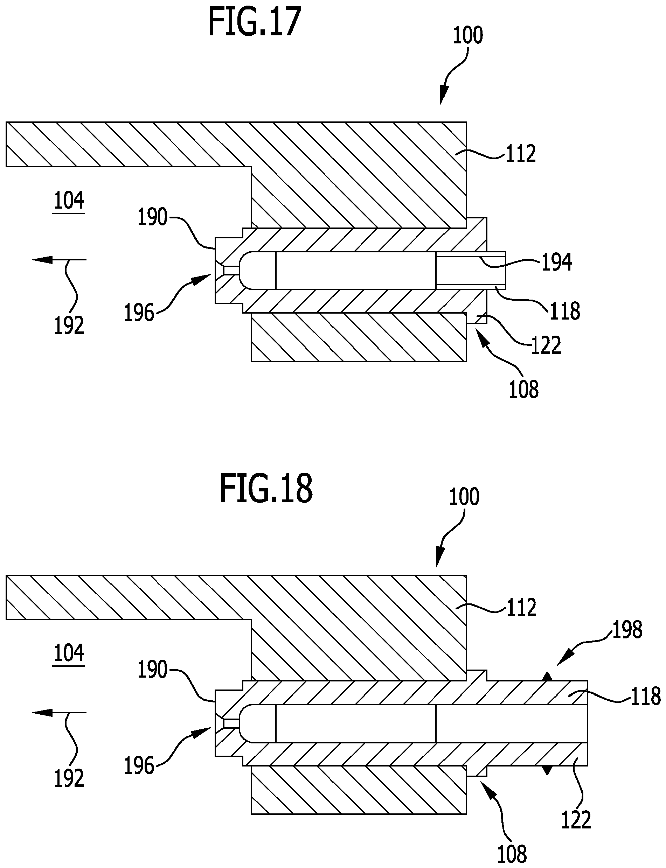

In den Fig. 17 und 18 sind unterschiedliche Varianten von Treibdüsenvorrichtungen 108 dargestellt, welche alternativ zu der in den Fig. 1 bis 11 dargestellten Ausführungsform vorgesehen sein können.

Bei der in Fig. 17 dargestellten Ausführungsform der Treibdüsenvorrichtung 108 ist insbesondere vorgesehen, dass das Treibdüsenelement 122 sich ausgehend von einem in die Saugkammer 104 mündenden Ende 190 entgegen einer Strahlrichtung 192 bis in einen Bereich außerhalb des Saugkammerelements 112 erstreckt.

Ein von dem Treibdüsenelement 122 verschiedener Treibmediumkanal 120 ist somit nicht vorgesehen. Vielmehr bildet das Treibdüsenelement 122 selbst zugleich den Treibmediumanschluss 118.

Der Treibmediumanschluss 118 kann beispielsweise als ein Innengewinde 194 in einem beispielsweise im Wesentlichen hohlzylindrischen Treibdüsenelement 122 ausgebildet sein.

In dieses Innengewinde 194 ist insbesondere eine Anschlussleitung zur Zuführung von Treibmedium einschraubbar.

Das der Saugkammer 104 zugewandte Ende 190 des Treibdüsenelements 122 ist beispielsweise mit einem Drallkörper 196 versehen.

Mittels eines solchen Drallkörpers 196 kann insbesondere eine Drallströmung im Mischkanal 106 erzeugt werden. Dies dient insbesondere einer optimierten Saugwirkung.

Im Übrigen stimmt die in Fig. 17 dargestellte Ausführungsform der Treibdüsenvorrichtung 108 hinsichtlich Aufbau und Funktion sowie hinsichtlich Herstellung mit der in den Fig. 1 bis 11 dargestellten Ausführungsform überein, so dass auf deren vorstehende Beschreibung insoweit Bezug genommen wird.

Insbesondere kann auch die in Fig. 17 dargestellte Ausführungsform der Treibdüsenvorrichtung 108 derart hergestellt werden, dass das Treibdüsenelement 122 durch Umspritzen desselben mit Kunststoff bei der Herstellung des Saugkammerelements 112 an dem Saugkammerelement 112 angeordnet wird. Alternativ hierzu kann ein Heißeinbetten oder Kalteinpressen des Treibdüsenelements 122 in das Saugkammerelement 112 vorgesehen sein.

Eine in Fig. 18 dargestellte weitere Ausführungsform einer Treibdüsenvorrichtung 108 unterscheidet sich von der in Fig. 17 dargestellten Ausführungsform im Wesentlichen dadurch, dass als Treibmediumanschluss 118 eine Art Schnellkupplung 198 vorgesehen ist.

Im Übrigen stimmt die in Fig. 18 dargestellte Ausführungsform der Treibdüsenvorrichtung 108 hinsichtlich Aufbau und Funktion sowie hinsichtlich Herstellung mit der in Fig. 17 dargestellten Ausführungsform überein, so dass auf deren vorstehende Beschreibung insoweit Bezug genommen wird.

## Patentansprüche

1. Ejektorvorrichtung (100), umfassend einen Grundkörper (158), welcher Folgendes umfasst:
- eine Saugkammer (104) zum Ansaugen eines Saugmediums;
- einen Mischkanal (106) zum Mischen eines Treibmediums mit dem Saugmedium;
- eine Treibdüsenvorrichtung (108) zum Erzeugen eines längs einer Strahlrichtung (192) aus der Saugkammer (104) heraus und in den Mischkanal (106) hinein gerichteten Treibmediumstrahls,
wobei die Ejektorvorrichtung (100) eine Befestigungsvorrichtung (160) zum Befestigen des Grundkörpers (158) der Ejektorvorrichtung (100) an einem Saugkanal (152) umfasst, wobei die Befestigungsvorrichtung (160) eine translative Arretiervorrichtung (166) zur Vermeidung einer translativen Bewegung des Grundkörpers (158) relativ zu dem Saugkanal (152) in einer parallel zu einer Mittelachse (168) eines Anschlussstutzens (156) des Saugkanals (152) verlaufenden Richtung umfasst und wobei die Befestigungsvorrichtung (160) eine rotative Arretiervorrichtung (178) zur Vermeidung einer Rotation des Grundkörpers (158) relativ zu dem Saugkanal (152) umfasst, **dadurch gekennzeichnet, dass** die translative Arretiervorrichtung (166) mindestens eine Rastvorrichtung (164) umfasst oder durch mindestens eine Rastvorrichtung (164) gebildet wird, und dass die translative Arretiervorrichtung (166) und die rotative Arretiervorrichtung (178) räumlich voneinander getrennt sind und/oder zeitlich nacheinander betätigbar sind.

2. Ejektorvorrichtung (100) nach Anspruch 1, **dadurch gekennzeichnet, dass** ein Saugkammerelement (112) des Grundkörpers (158) die folgenden Komponenten umfasst:
eine Einhausung (146) für die Saugkammer (104);
einen Saugkanalanschluss (129);
einen Treibmediumanschluss (118);
eine Treibdüsenelementaufnahme (124);
einen Treibmediumkanal (120) zur fluidwirksamen Verbindung des Treibmediumanschlusses (118) mit der Treibdüsenelementaufnahme (124);
einen Flanschabschnitt (130) zum Verbinden des Saugkammerelements (112) mit einem hiervon verschiedenen Mischkanalelement (116) des Grundkörpers (158);
ein oder mehrere Arretierelemente (170) der translativen Arretiervorrichtung (166) der Befestigungsvorrichtung (160) zum Befestigen des Grundkörpers (158) an einem Saugkanal (152);
ein oder mehrere Arretierelemente (170) der rotativen Arretiervorrichtung (178) der Befestigungsvorrichtung (160) zum Befestigen des Grundkörpers (158) an einem Saugkanal (152);
eine Positioniervorrichtung (182) zur Positionierung des Saugkammerelements (112) relativ zu der translativen Arretiervorrichtung (166) und/oder relativ zu der rotativen Arretiervorrichtung (178).

3. Ejektorvorrichtung (100) nach einem der Ansprüche 1 oder 2, **dadurch gekennzeichnet, dass** ein Mischkanalelement (116) des Grundkörpers (158) die folgenden Komponenten umfasst:
eine Einhausung (146) für den Mischkanal (106);
einen Abführanschluss (144);
einen Flanschabschnitt (130) zum Verbinden des Mischkanalelements (116) mit einem hiervon verschiedenen Saugkammerelement (112) des Grundkörpers (158);
ein oder mehrere Arretierelemente (170) der translativen Arretiervorrichtung (166) der Befestigungsvorrichtung (160) zum Befestigen des Grundkörpers (158) an einem Saugkanal (152);
ein oder mehrere Arretierelemente (170) der rotativen Arretiervorrichtung (178) der Befestigungsvorrichtung (160) zum Befestigen des Grundkörpers (158) an einem Saugkanal (152);
eine Positioniervorrichtung (182) zur Positionierung des Mischkanalelements (116) relativ zu der translativen Arretiervorrichtung (166) und/oder relativ zu der rotativen Arretiervorrichtung (178).

4. Ejektorvorrichtung (100) nach einem der Ansprüche 1 bis 3, **dadurch gekennzeichnet, dass** die translative Arretiervorrichtung (166) und die rotative Arretiervorrichtung (178)
- funktional voneinander getrennt und/oder
- unabhängig voneinander betätigbar sind.

5. Ejektorvorrichtung (100) nach einem der Ansprüche 1 bis 4, **dadurch gekennzeichnet, dass** die translative Arretiervorrichtung (166) und/oder die rotative Arretiervorrichtung (178) jeweils ein oder mehrere Arretierelemente (170), insbesondere Rastelemente (172) und/oder Rastaufnahmen, umfasst.

6. Ejektorvorrichtung (100) nach Anspruch 5, **dadurch gekennzeichnet, dass** ein oder mehrere Arretierelemente (170) der translativen Arretiervorrichtung (166) und/oder der rotativen Arretiervorrichtung (178) als Vorsprünge (186), insbesondere als Rasthaken (174), an einem Saugkammerelement (112) des Grundkörpers (158) ausgebildet sind.

7. Ejektorvorrichtung (100) nach einem der Ansprüche 5 oder 6, **dadurch gekennzeichnet, dass** ein oder mehrere Arretierelemente (170) der translativen Arretiervorrichtung (166) und/oder der rotativen Arretiervorrichtung (178) als Vorsprünge (186), insbesondere als Rasthaken (174), an einem Mischkanalelement (116) des Grundkörpers (158) ausgebildet sind.

8. Ejektorvorrichtung (100) nach einem der Ansprüche 5 bis 7, **dadurch gekennzeichnet, dass** ein Arretierelement (170) der translativen Arretiervorrichtung (166) als ringförmige Wulst oder Verdickung, insbesondere als ein Rastring (176), an einer Außenseite eines Anschlussstutzens (156) des Saugkanals (152) ausgebildet ist.

9. Ejektorvorrichtung (100) nach einem der Ansprüche 5 bis 8, **dadurch gekennzeichnet, dass** ein oder mehrere Arretierelemente (170) der translativen Arretiervorrichtung (166) und/oder der rotativen Arretiervorrichtung (178) als Vertiefungen (188) in einem Anschlussstutzen (156) des Saugkanals (152) ausgebildet sind.

10. Ejektorvorrichtung (100) nach einem der Ansprüche 5 bis 9, **dadurch gekennzeichnet, dass** ein oder mehrere Arretierelemente (170) der translativen Arretiervorrichtung (166) und/oder der rotativen Arretiervorrichtung (178) an einer der Saugkammer (104) abgewandten Hälfte des Mischkanalelements (116), insbesondere an einem der Saugkammer (104) abgewandten Endbereich (180) des Mischkanalelements (116), angeordnet sind.

11. Ejektorvorrichtung (100) nach einem der Ansprüche 1 bis 10, **dadurch gekennzeichnet, dass** der Grundkörper (158) mittels der Befestigungsvorrichtung (160) zunächst durch eine Translationsbewegung längs einer Translationsrichtung auf einen Anschlussstutzen (156) eines Saugkanals (152) aufschiebbar ist und dass der Grundkörper (158) mittels der Befestigungsvorrichtung (160) anschließend um eine Mittelachse (168) des Anschlussstutzens (156) drehbar und hierdurch in einer Drehausrichtung relativ zu dem Anschlussstutzen (156) festlegbar ist.

12. Kombination aus einer Zylinderkopfhaube (102) und einer Ejektorvorrichtung (100) nach einem der Ansprüche 1 bis 11.

13. Kombination nach Anspruch 12, **dadurch gekennzeichnet, dass** die Zylinderkopfhaube (102) ein oder mehrere Arretierelemente (170) der translativen Arretiervorrichtung (166) und/oder ein oder mehrere Arretierelemente (170) der rotativen Arretiervorrichtung (178) umfasst, welche zur translativen und/oder rotativen Arretierung des Grundkörpers (158) der Ejektorvorrichtung (100) relativ zu der Zylinderkopfhaube (102) mit einem oder mehreren an dem Grundkörper (158) angeordneten Arretierelementen (170) der translativen Arretiervorrichtung (166) und/oder der rotativen Arretiervorrichtung (178) in Eingriff bringbar sind.

## Claims

1. Ejector device (100) comprising a base body (158) which comprises the following:
- a suction chamber (104) for sucking in a suction medium;
- a mixing channel (106) for mixing a propelling medium with the suction medium;
- a drive nozzle device (108) for generating and directing a propelling medium jet along a jet direction (192) from the suction chamber (104) and into the mixing channel (106),
wherein the ejector device (100) comprises a fastening device (160) for fastening the base body (158) of the ejector device (100) to a suction channel (152),
wherein the fastening device (160) comprises a translational locking device (166) for preventing a translational movement of the base body (158) relative to the suction channel (152) in a direction running parallel to a center axis (168) of a connecting piece (156) of the suction channel (152) and
wherein the fastening device (160) comprises a rotational locking device (178) for preventing the base body (158) from rotating relative to the suction channel (152), **characterized in that**
the translational locking device (166) comprises at least one latching device (164) or is formed by at least one latching device (164), and
**in that** the translational locking device (166) and the rotational locking device (178) are spatially separate from one another and/or are actuable consecutively.

2. Ejector device (100) in accordance with Claim 1, **characterized in that** a suction chamber element (112) of the base body (158) comprises the following components:
a housing (146) for the suction chamber (104);
a suction channel connection (129);
a propelling medium connection (118);
a drive nozzle element receiving means (124);
a propelling medium channel (120) for the fluidic connection of the propelling medium connection (118) to the drive nozzle element receiving means (124);
a flange portion (130) for connecting the suction chamber element (112) to a mixing channel element (116) of the base body (158) that differs therefrom;
one or more locking elements (170) of the translational locking device (166) of the fastening device (160) for fastening the base body (158) to a suction channel (152);
one or more locking elements (170) of the rotational locking device (178) of the fastening device (160) for fastening the base body (158) to a suction channel (152);
a positioning device (182) for positioning the suction chamber element (112) relative to the translational locking device (166) and/or relative to the rotational locking device (178).

3. Ejector device (100) in accordance with either of Claims 1 or 2, **characterized in that** a mixing channel element (116) of the base body (158) comprises the following components:
a housing (146) for the mixing channel (106);
a discharge connection (144);
a flange portion (130) for connecting the mixing channel element (116) to a suction chamber element (112) of the base body (158) that differs therefrom;
one or more locking elements (170) of the translational locking device (166) of the fastening device (160) for fastening the base body (158) to a suction channel (152);
one or more locking elements (170) of the rotational locking device (178) of the fastening device (160) for fastening the base body (158) to a suction channel (152);
a positioning device (182) for positioning the mixing channel element (116) relative to the translational locking device (166) and/or relative to the rotational locking device (178).

4. Ejector device (100) in accordance with any one of Claims 1 to 3, **characterized in that** the translational locking device (166) and the rotational locking device (178) are
- functionally separate from one another and/or
- actuable independently of one another.

5. Ejector device (100) in accordance with any one of Claims 1 to 4, **characterized in that** the translational locking device (166) and/or the rotational locking device (178) each comprise one or more locking elements (170), in particular latching elements (172) and/or latching receiving means.

6. Ejector device (100) in accordance with Claim 5, **characterized in that** one or more locking elements (170) of the translational locking device (166) and/or of the rotational locking device (178) are configured as projections (186), in particular as latching hooks (174), on a suction chamber element (112) of the base body (158).

7. Ejector device (100) in accordance with either of Claims 5 or 6, **characterized in that** one or more locking elements (170) of the translational locking device (166) and/or of the rotational locking device (178) are configured as projections (186), in particular as latching hooks (174), on a mixing channel element (116) of the base body (158).

8. Ejector device (100) in accordance with any one of Claims 5 to 7, **characterized in that** a locking element (170) of the translational locking device (166) is configured as an annular bead or thickening, in particular as a latching ring (176), on an outside of a connecting piece (156) of the suction channel (152).

9. Ejector device (100) in accordance with any one of Claims 5 to 8, **characterized in that** one or more locking elements (170) of the translational locking device (166) and/or of the rotational locking device (178) are configured as depressions (188) in a connecting piece (156) of the suction channel (152).

10. Ejector device (100) in accordance with any one of Claims 5 to 9, **characterized in that** one or more locking elements (170) of the translational locking device (166) and/or of the rotational locking device (178) are arranged on a half of the mixing channel element (116) facing away from the suction chamber (104), in particular on an end region (180) of the mixing channel element (116) facing away from the suction chamber (104).

11. Ejector device (100) in accordance with any one of Claims 1 to 10, **characterized in that**, by means of the fastening device (160), the base body (158) can initially be slipped onto a connecting piece (156) of a suction channel (152) through a translational movement along a translational direction and **in that**, by means of the fastening device (160), the base body (158) can then be rotated about a center axis (168) of the connecting piece (156) and can thereby be fixed in a rotational orientation relative to the connecting piece (156).

12. Combination of a cylinder head cover (102) and an ejector device (100) in accordance with any one of Claims 1 to 11.

13. Combination in accordance with Claim 12, **characterized in that** the cylinder head cover (102) comprises one or more locking elements (170) of the translational locking device (166) and/or one or more locking elements (170) of the rotational locking device (178) which can be brought into engagement for the translational and/or rotational locking of the base body (158) of the ejector device (100) relative to the cylinder head cover (102) with one or more locking elements (170) of the translational locking device (166) and/or the rotational locking device (178) arranged on the base body (158).

## Revendications

1. Dispositif d'éjection (100), comprenant un corps de base (158), lequel comprend ce qui suit :
- une chambre d'aspiration (104) pour aspirer un fluide d'aspiration ;
- un canal de mélange (106) pour mélanger un fluide propulseur au fluide d'aspiration ;
- un dispositif de buse de propulsion (108) pour générer un jet de fluide propulseur pointant hors de la chambre d'aspiration (104) et à l'intérieur du canal de mélange (106) le long d'une direction de jet (192),
dans lequel le dispositif d'éjection (100) comprend un dispositif de fixation (160) pour fixer le corps de base (158) du dispositif d'éjection (100) à un canal d'aspiration (152),
dans lequel le dispositif de fixation (160) comprend un dispositif d'arrêt de translation (166) pour éviter un déplacement de translation du corps de base (158) par rapport au canal d'aspiration (152) dans une direction s'étendant de manière parallèle à un axe central (168) d'une tubulure de raccordement (156) du canal d'aspiration (152), et
dans lequel le dispositif de fixation (160) comprend un dispositif d'arrêt de rotation (178) pour éviter une rotation du corps de base (158) par rapport au canal d'aspiration (152), **caractérisé en ce**
**que** le dispositif d'arrêt de translation (166) comprend au moins un dispositif d'enclenchement (164) ou est formé par au moins un dispositif d'enclenchement (164), et
**que** le dispositif d'arrêt de translation (166) et le dispositif d'arrêt de rotation (178) sont séparés spatialement l'un de l'autre et/ou peuvent être actionnés dans le temps l'un après l'autre.

2. Dispositif d'éjection (100) selon la revendication 1, **caractérisé en ce qu'**un élément de chambre d'aspiration (112) du corps de base (158) comprend les composants suivants :
une enceinte (146) pour la chambre d'aspiration (104) ;
un raccord de canal d'aspiration (129) ;
un raccord de fluide propulseur (118) ;
un logement d'élément de buse de propulsion (124) ;
un canal de fluide propulseur (120) pour relier en communication fluidique efficace le raccord de fluide propulseur (118) au logement d'élément de buse de propulsion (124);
une section de bride (130) pour relier l'élément de chambre d'aspiration (112) à un élément de canal de mélange (116), différent de ce dernier, du corps de base (158) ;
un ou plusieurs éléments d'arrêt (170) du dispositif d'arrêt de translation (166) du dispositif de fixation (160) pour fixer le corps de base (158) à un canal d'aspiration (152) ;
un ou plusieurs éléments d'arrêt (170) du dispositif d'arrêt de rotation (178) du dispositif de fixation (160) pour fixer le corps de base (158) à un canal d'aspiration (152) ;
un dispositif de positionnement (182) pour positionner l'élément de chambre d'aspiration (112) par rapport au dispositif d'arrêt de translation (166) et/ou par rapport au dispositif d'arrêt de rotation (178).

3. Dispositif d'éjection (100) selon l'une quelconque des revendications 1 ou 2, **caractérisé en ce qu'**un élément de canal de mélange (116) du corps de base (158) comprend les composants suivants :
une enceinte (146) pour le canal de mélange (106) ;
un raccord d'évacuation (144) ;
une section de bride (130) pour relier l'élément de canal de mélange (116) à un élément de chambre d'aspiration (112), différent de ce dernier, du corps de base (158) ;
un ou plusieurs éléments d'arrêt (170) du dispositif d'arrêt de translation (166) du dispositif de fixation (160) pour fixer le corps de base (158) à un canal d'aspiration (152) ;
un ou plusieurs éléments d'arrêt (170) du dispositif d'arrêt de rotation (178) du dispositif de fixation (160) pour fixer le corps de base (158) à un canal d'aspiration (152) ;
un dispositif de positionnement (182) pour positionner l'élément de canal de mélange (116) par rapport au dispositif d'arrêt de translation (166) et/ou par rapport au dispositif d'arrêt de rotation (178).

4. Dispositif d'éjection (100) selon l'une quelconque des revendications 1 à 3, **caractérisé en ce que** le dispositif d'arrêt de translation (166) et le dispositif d'arrêt de rotation (178)
- sont séparés l'un de l'autre de manière fonctionnelle et/ou
- peuvent être actionnés indépendamment l'un de l'autre.

5. Dispositif d'éjection (100) selon l'une quelconque des revendications 1 à 4, **caractérisé en ce que** le dispositif d'arrêt de translation (166) et/ou le dispositif d'arrêt de rotation (178) comprennent respectivement un ou plusieurs éléments d'arrêt (170), en particulier des éléments d'enclenchement (172) et/ou des logements d'enclenchement.

6. Dispositif d'éjection (100) selon la revendication 5, **caractérisé en ce qu'**un ou plusieurs éléments d'arrêt (170) du dispositif d'arrêt de translation (166) et/ou du dispositif d'arrêt de rotation (178) sont réalisés en tant que saillies (186), en particulier en tant que crochets d'enclenchement (174), sur un élément de chambre d'aspiration (112) du corps de base (158).

7. Dispositif d'éjection (100) selon l'une quelconque des revendications 5 ou 6, **caractérisé en ce qu'**un ou plusieurs éléments d'arrêt (170) du dispositif d'arrêt de translation (166) et/ou du dispositif d'arrêt de rotation (178) sont réalisés en tant que saillies (186), en particulier en tant que crochets d'enclenchement (174), sur un élément de canal de mélange (116) du corps de base (158).

8. Dispositif d'éjection (100) selon l'une quelconque des revendications 5 à 7, **caractérisé en ce qu'**un élément d'arrêt (170) du dispositif d'arrêt de translation (166) est réalisé en tant qu'un bourrelet ou une épaisseur annulaire, en particulier en tant qu'une bague d'enclenchement (176), sur un côté extérieur d'une tubulure de raccordement (156) du canal d'aspiration (152).

9. Dispositif d'éjection (100) selon l'une quelconque des revendications 5 à 8, **caractérisé en ce qu'**un ou plusieurs éléments d'arrêt (170) du dispositif d'arrêt de translation (166) et/ou du dispositif d'arrêt de rotation (178) sont réalisés en tant que renfoncements (188) dans une tubulure de raccordement (156) du canal d'aspiration (152).

10. Dispositif d'éjection (100) selon l'une quelconque des revendications 5 à 9, **caractérisé en ce qu'**un ou plusieurs éléments d'arrêt (170) du dispositif d'arrêt de translation (166) et/ou du dispositif d'arrêt de rotation (178) sont disposés au niveau d'une moitié, opposée à la chambre d'aspiration (104), de l'élément de canal de mélange (116), en particulier sur une zone d'extrémité (180), opposée à la chambre d'aspiration (104), de l'élément de canal de mélange (116).

11. Dispositif d'éjection (100) selon l'une quelconque des revendications 1 à 10, **caractérisé en ce que** le corps de base (158) peut être enfilé par coulissement sur une tubulure de raccordement (156) d'un canal d'aspiration (152) au moyen du dispositif de fixation (160) d'abord par un déplacement de translation le long d'une direction de translation, et que le corps de base (158) peut être immobilisé au moyen du dispositif de fixation (160) ensuite de manière à pouvoir tourner autour d'un axe central (168) de la tubulure de raccordement (156) et, de ce fait, dans une orientation de rotation par rapport à la tubulure de raccordement (156).

12. Combinaison composée d'un couvre-culasse (102) et d'un dispositif d'éjection (100) selon l'une quelconque des revendications 1 à 11.

13. Combinaison selon la revendication 12, **caractérisée en ce que** le couvre-culasse (102) comprend un ou plusieurs éléments d'arrêt (170) du dispositif d'arrêt de translation (166) et/ou un ou plusieurs éléments d'arrêt (170) du dispositif d'arrêt de rotation (178), lesquels peuvent être amenés en prise avec un ou plusieurs éléments d'arrêt (170), disposés au niveau du corps de base (158), du dispositif d'arrêt de translation (166) et/ou du dispositif d'arrêt de rotation (178) pour arrêter la translation et/ou la rotation du corps de base (158) du dispositif d'éjection (100) par rapport au couvre-culasse (102).
